(19) **Europäisches Patentamt**
**European Patent Office**
**Office européen des brevets**

(11) **EP 1 830 959 B1**

(12) **FASCICULE DE BREVET EUROPEEN**

(45) Date de publication et mention de la délivrance du brevet:
**06.07.2011 Bulletin 2011/27**

(21) Numéro de dépôt: **05826573.7**

(22) Date de dépôt: **13.12.2005**

(51) Int Cl.:
*B01J 35/10* [(2006.01)]    *B01J 21/12* [(2006.01)]
*B01J 21/18* [(2006.01)]    *B01J 29/08* [(2006.01)]
*B01J 29/70* [(2006.01)]    *B01J 29/18* [(2006.01)]
*C10G 45/12* [(2006.01)]    *C10G 45/06* [(2006.01)]
*C01G 45/08* [(2006.01)]    *C10G 47/02* [(2006.01)]

(86) Numéro de dépôt international:
**PCT/FR2005/003138**

(87) Numéro de publication internationale:
**WO 2006/070090 (06.07.2006 Gazette 2006/27)**

(54) **CATALYSEUR ZEOLITHIQUE A TENEUR CONTROLEE EN ELEMENT DOPANT ET PROCEDE AMELIORE DE TRAITEMENT DE CHARGES HYDROCARBONEES**

ZEOLITHKATALYSATOR MIT KONTROLLIERTEM GEHALT EINES DOTIERUNGSELEMENTS UND VERBESSERTES VERFAHREN ZUR BEHANDLUNG VON KOHLENWASSERSTOFFEINSÄTZEN

ZEOLITE CATALYST WITH CONTROLLED CONTENT OF A DOPING ELEMENT AND IMPROVED METHOD FOR TREATING HYDROCARBON FEEDSTOCKS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2004 FR 0413802**

(43) Date de publication de la demande:
**12.09.2007 Bulletin 2007/37**

(73) Titulaire: **Institut Français du Pétrole**
**92852 Rueil Malmaison Cedex (FR)**

(72) Inventeurs:
• **EUZEN, Patrick**
**F-75001 Paris (FR)**
• **CHAUMONNOT, Alexandra**
**F-69008 Lyon (FR)**
• **BOBIN, Carole**
**F-69290 Grezieu la Varenne (FR)**
• **BOURGES, Patrick**
**F-69003 Lyon (FR)**
• **GUERET, Christophe**
**F-69560 St Romain en Gal (FR)**
• **DULOT, Hugues**
**F-69007 Lyon (FR)**

(56) Documents cités:
**EP-A- 0 288 363    EP-A- 0 980 708**
**EP-A- 1 415 712    EP-A- 1 462 167**
**FR-A- 2 793 704    FR-A- 2 863 913**

**Description**

**Domaine de l'invention**

La présente invention concerne des catalyseurs dopés sur supports à base de matrice silico-aluminique et à base de zéolithe Y définie par un paramètre cristallin a de la maille élémentaire compris entre 24,40 x 10$^{-10}$ m et 24,15 x 10$^{-10}$ m et les procédés d'hydrocraquage, d'hydroconversion et d'hydrotraitement les mettant en oeuvre.

L'objectif du procédé est essentiellement la production de distillats moyens, c'est-à-dire de coupes à point d'ébullition initial d'au moins 150°C et final allant jusqu'à avant le point d'ébullition initial du résidu, par exemple inférieur à 340°C, ou encore à 370°C.

**Art Antérieur**

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports dont les surfaces varient généralement de 150 à 800 m$^2$.g$^{-1}$ et présentant une acidité superficielle, telles que les alumines halogénées (chlorées ou fluorées notamment), les combinaisons d'oxydes de bore et d'aluminium, les alumines-silice amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

L'équilibre entre les deux fonctions acide et hydrogénante est un des paramètres qui régissent l'activité et la sélectivité du catalyseur. Une fonction acide faible et une fonction hydrogénante forte donnent des catalyseurs peu actifs, travaillant à température en général élevée (supérieure ou égale à 390-400 °C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens. Inversement, une fonction acide forte et une fonction hydrogénante faible donnent des catalyseurs actifs, mais présentant de moins bonnes sélectivités en distillats moyens (carburéacteurs et gazoles).

Un type de catalyseurs conventionnels d'hydrocraquage est à base de supports amorphes modérément acides, tels les alumines-silice par exemple. Ces systèmes sont utilisés pour produire des distillats moyens de bonne qualité, et éventuellement, des bases huiles. Ces catalyseurs sont par exemple utilisés dans les procédés en deux étapes.

Les performances de ces catalyseurs sont étroitement liées à leurs caractéristiques physico-chimiques, et plus particulièrement à leurs caractéristiques texturales. Ainsi et d'une façon générale, la présence de macropores dans les catalyseurs comportant une alumine-silice (tels que ceux décrits par exemple dans le brevet US 5 370 788) est un inconvénient. On entend par macropores, des pores dont le diamètre est supérieur à 500 Å. Il est également avantageux d'accroître la densité de remplissage des catalyseurs afin d'accroître leurs performances catalytiques. A cet égard, il est avantageux d'utiliser des catalyseurs à faible volume poreux total. Pour un même volume poreux total, on obtient ainsi une meilleure activité catalytique.

De même, les performances des catalyseurs sont étroitement corrélées à leur structure amorphe ou cristalline. Les catalyseurs comportant partiellement une zéolithe ou un mélange de zéolithes présentent quant à eux une activité catalytique supérieure à celles des silice-alumines amorphes, mais présentent des sélectivités en produits légers qui sont plus élevées.

Bien que de bonnes performances puissent être obtenues en améliorant les caractéristiques texturales, les performances de ces catalyseurs sont également liées à la nature de phase hydrogénante. L'activité hydrogénante va ainsi jouer un rôle dans les réactions d'hydrodésulfuration (HDS), d'hydrodénitrogénation (HDN), d'hydrodéarornatisation (HDA) et sur la stabilité du catalyseur.

En voulant résoudre ces problèmes, la demanderesse a mis en évidence et ceci de manière inattendue que l'incorporation dans une matrice, à teneur réduite en macropores, de certaines zéolithes seules ou en mélange avec une fonction hydrogénante améliorée permettait de préparer des catalyseurs présentant des performances catalytiques améliorées dans les procédés d'hydrocraquage. Elle a ainsi découvert de manière surprenante que l'adjonction d'un pourcentage contrôlé d'éléments dopants sur des catalyseurs ayant de telles caractéristiques texturales conduit à des performances catalytiques inattendues en hydrocraquage/hydroconversion et hydrotraitement. Plus précisément, l'invention concerne un catalyseur dopé d'hydrocraquage sur un support à base de zéolithe Y définie par un paramètre cristallin a de la maille élémentaire compris entre 24,40 x $10^{-10}$ m et 24,15 x $10^{-10}$ m et de matrice alumino-silicate à teneur réduite en macropores et les procédés d'hydrocraquage/hydroconversion et hydrotraitement le mettant en oeuvre.

**Techniques de caractérisation**

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume mercure des supports et des catalyseurs, le volume mesuré par intrusion au porosimètre à mercure selon la norme ASTM D4284-83 à une pression maximale de 4000 bar, utilisant une tension de surface de 484 dyne/cm et un angle de contact pour les supports silice-alumine amorphe de 140°. On définit le diamètre moyen mercure comme étant un diamètre tel que tous les pores de taille inférieure à ce diamètre constituent 50% du volume poreux ($V_{Hg}$), dans un intervalle compris entre 36 Å et 1000 Å. Une des raisons pour lesquelles il est préférable d'utiliser le support comme base pour définir la distribution poreuse tient dans le fait que l'angle de contact du mercure varie après imprégnation des métaux et ceci en fonction de la nature et de type de métaux. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume mercure en ml/g donnée dans le texte qui suit correspond à la valeur du volume mercure total (volume poreux total mesuré par intrusion au porosimètre à mercure) en ml/g mesurée sur l'échantillon moins la valeur du volume mercure en ml/g mesurée sur le même échantillon pour une pression correspondant à 30 psi (environ 2 bars). On définit également le diamètre moyen mercure comme étant un diamètre tel que tous les pores de taille inférieure à ce diamètre constituent 50% du volume poreux total mercure.

Afin de mieux caractériser la distribution poreuse, on définit enfin les critères de distribution poreuse suivants en mercure: le volume V1 correspond au volume contenu dans les pores dont le diamètre est inférieur au diamètre moyen moins 30 Å. Le volume V2 correspond au volume contenu dans les pores de diamètre supérieur ou égal au diamètre moyen moins 30 Å et inférieur au diamètre moyen plus 30 Å. Le volume V3 correspond au volume contenu dans les pores de diamètre supérieur ou égal au diamètre moyen plus 30 Å. Le volume V4 correspond au volume contenu dans les pores dont le diamètre est inférieur au diamètre moyen moins 15 Å. Le volume V5 correspond au volume contenu dans les pores de diamètre supérieur ou égal au diamètre moyen moins 15 Å et inférieur au diamètre moyen plus 15 Å. Le volume V6 correspond au volume contenu dans les pores de diamètre supérieur ou égal au diamètre moyen plus 15 Å.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society", 73, 373, (1951) écrit par E.P.Barrett, L.G.Joyner et P.P.Halenda. Dans l'exposé qui suit de l'invention, on entend par volume adsorption azote, le volume mesuré pour $P/P_0$= 0,99, pression pour laquelle il est admis que l'azote a rempli tous les pores. On définit le diamètre moyen désorption azote comme étant un diamètre tel que tous les pores inférieurs à ce diamètre constituent 50% du volume poreux (Vp) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de Liège, 6ème série, Tome I, fasc.4, pp.169-209 (1971)".

La teneur en sodium a été mesurée par spectrométrie d'absorption atomique.

La diffraction X est une technique pouvant être utilisée pour caractériser les supports et catalyseurs selon l'invention. Dans l'exposé qui suit, l'analyse des rayons X est réalisée sur poudre avec un diffractomètre Philips PW 1830 opérant en réflexion et équipé d'un monochromateur arrière en utilisant la radiation CoKalpha ($\lambda K_{\alpha1}$ = 1.7890 Å, $\lambda|K_{\alpha2}$ = 1.793 Å, rapport d'intensité $K_{\alpha1}/K_{\alpha2}$ = 0,5). Pour le diagramme de diffraction X de l'alumine gamma, on se reportera à la base de données ICDD, fiche 10-0425. En particulier, les 2 pics les plus intenses sont situés à une position correspondant à un d compris entre 1,39 et 1,40 Å et un d compris entre 1,97 Å à 2,00 Å. On appelle d la distance interréticulaire qui est déduite de la position angulaire en utilisant la relation dite de Bragg ($2 d_{(hkl)} * \sin(\theta) = n * \lambda$). Par alumine gamma, on entend dans la suite du texte entre autres par exemple une alumine comprise dans le groupe composé des alumines gamma cubique, gamma pseudo-cubique, gamma tétragonale, gamma mal ou peu cristallisée, gamma grande surface, gamma basse surface, gamma issue de grosse boehmite, gamma issue de boehmite cristallisée, gamma issue de boehmite peu ou mal cristallisée, gamma issue d'un mélange de boehmite cristallisée et d'un gel amorphe, gamma issue d'un gel amorphe, gamma en évolution vers delta. Pour les positions des pics de diffraction des alumines êta, delta et thêta, on peut se référer à l'article de B.C. Lippens, J.J. Steggerda, dans Physical and Chemical aspects of adsorbents and catalysts, E.G. Linsen (Ed.), Academic Press, London. 1970, p.171-211.

Pour les supports et catalyseurs selon l'invention, le diagramme de diffraction X met en évidence un pic large caractéristique de la présence de silice amorphe.

Par ailleurs, dans l'ensemble du texte qui suit, le composé d'alumine peut contenir une fraction amorphe difficilement détectable par les techniques de DRX. On sous-entendra donc par la suite que les composés d'alumine utilisés ou décrits dans le texte peuvent contenir une fraction amorphe ou mal cristallisée.

Les matrices des catalyseurs selon l'invention ont été analysées par RMN MAS du solide de $^{27}$Al sur un spectromètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après :

Entre 100 et 40 ppm, aluminiums de type tétra-coordinés, notés $Al_{IV}$,
Entre 40 et 20 ppm, aluminiums de type penta-coordinés, notés $Al_V$,
Entre 20 et -100 ppm, aluminiums de type hexa-coordinés, notés $Al_{VI}$.

L'atome d'aluminium est un noyau quadripolaire. Dans certaines conditions d'analyse (champs de radiofréquence faible : 30 kHz, angle d'impulsion faible : $\pi/2$ et échantillon saturé en eau), la technique de RMN de rotation à l'angle magique (MAS) est une technique quantitative. La décomposition des spectres RMN MAS permet d'accéder directement à la quantité des différentes espèces. Le spectre est calé en déplacement chimique par rapport à une solution 1 M de nitrate d'aluminium. Le signal d'aluminium est à zéro ppm. Nous avons choisi d'intégrer les signaux entre 100 et 20 ppm pour les $Al_{IV}$ et $Al_V$, ce qui correspond à l'aire 1, et entre 20 et -100 ppm pour $Al_{VI}$, ce qui correspond à l'aire 2. Dans l'exposé qui suit de l'invention, on entend par proportion des $Al_{VI}$ octaédriques le rapport suivant: aire 2/ (aire 1 + aire 2).

L'environnement du silicium des alumines-silice est étudié par la RMN de $^{29}$Si. Les tables de déplacements chimiques en fonction du degré de condensation ont été déduites de l'ouvrage de G.Engelhardt et D.Michel : «High résolution solid-state NMR of silicates and zeolites » (Wiley), 1987.

La RMN 29 Si montre les déplacements chimiques des différentes espèces de silicium telles que $Q^4$ (-105ppm à - 120 ppm), $Q^3$ (-90ppm à -102 ppm) et $Q^2$ (-75ppm à - 93 ppm). Les sites avec un déplacement chimique à -102 ppm peuvent être des sites de type $Q^3$ ou $Q^4$, nous les appelons sites $Q^{3-4}$. Les définitions des sites sont les suivantes :

sites $Q^4$ : Si lié à 4Si (ou Al),
sites $Q^3$ : Si lié à 3 Si(ou Al) et 1 OH
sites $Q^2$ : Si lié à 2 Si(ou Al) et 2 OH;

Les alumines-silice de l'invention sont composées de silicium de types $Q^2$, $Q^3$, $Q^{3-4}$ et $Q^4$. De nombreuses espèces seraient de type $Q^2$, approximativement de l'ordre de 10 à 80%, de préférence 20 à 60 % et manière préférée de 20 à 40%. La proportion des espèces $Q^3$ et $Q^{3-4}$ est également importante, approximativement de l'ordre de 5 à 50 % et de manière préférée de 10 à 40% pour les deux espèces.

L'environnement des siliciums a été étudié par RMN CP MAS $^1$H->$^{29}$Si, (300 MHz, vitesse de rotation : 4000 Hz). Dans ce cas, seul le silicium lié à des liaisons OH doit répondre. La table des déplacements chimiques utilisés est celle de Kodakari et al., Langmuir, 14, 4623-4629, 1998. Les attributions sont les suivantes : -108 ppm (Q4), -99 ppm (Q$^3$/Q4(1 Al)), -91 ppm (Q3/Q3(1Al)), -84 ppm (Q2/Q3(2Al),-78 ppm (Q2/Q3(3Al) et-73 ppm Q1/Q2 (3 Al).

Les alumines-silice de l'invention se présentent sous la forme de superposition de plusieurs massifs. Le pic principal de ces massifs est généralement situé à -110 ppm.

Une méthode de caractérisation des supports et catalyseurs selon l'invention pouvant être utilisée est la microscopie électronique par transmission (MET). Pour cela on utilise un microscope électronique (du type Jeol 2010 ou Philips Tecnai20F éventuellement avec balayage) équipé d'un spectromètre à dispersion d'énergie (EDS) pour l'analyse des rayons X (par exemple un Tracor ou un Edax). Le détecteur EDS doit permettre la détection des éléments légers. L'association de ces deux outils, MET et EDS, permet de combiner l'imagerie et l'analyse chimique locale avec une bonne résolution spatiale.

Pour ce type d'analyse, les échantillons sont finement broyés à sec dans un mortier ; la poudre est ensuite incluse dans de la résine pour réaliser des coupes ultrafines d'épaisseur 70 nm environ. Ces coupes sont recueillies sur des grilles de Cu recouvertes d'un film de carbone amorphe à trous servant de support. Elles sont ensuite introduites dans le microscope pour observation et analyse sous vide secondaire. En imagerie, on distingue alors aisément les zones d'échantillon des zones de résine. On procède ensuite à un certain nombre d'analyses, 10 au minimum, de préférence comprises entre 15 et 30, sur différentes zones de l'échantillon industriel. La taille du faisceau électronique pour l'analyse des zones (déterminant approximativement la taille des zones analysées) est de 50 nm de diamètre au maximum, de préférence de 20 nm, de manière encore plus préférée 10, 5, 2 ou 1nm de diamètre. En mode balayé, la zone analysée sera fonction de la taille de la zone balayée et non plus de la taille du faisceau généralement réduit.

Le traitement semi quantitatif des spectres X recueillis à l'aide du spectromètre EDS permet d'obtenir la concentration relative de Al et de Si (en % atomique) et le rapport Si/Al pour chacune des zones analysées. On peut alors calculer la moyenne $Si/Al_m$ et l'écart type $\sigma$ de cet ensemble de mesures. Dans les exemples non limitatifs de l'exposé qui suit de l'invention, la sonde de 50 nm est la sonde utilisée pour caractériser les supports et catalyseurs selon l'invention sauf mention contraire.

Les zéolithes utilisées pour la préparation des catalyseurs d'hydrocraquage sont caractérisées par plusieurs grandeurs comme leur rapport molaire $SiO_2/Al_2O3$ de charpente, leur paramètre cristallin, leur répartition poreuse, leur surface spécifique, leur capacité de reprise en ion sodium, ou encore leur capacité d'adsorption de vapeur d'eau.

Le taux de pics et la fraction cristalline sont des paramètres importants à considérer. Les taux de pics et les fractions cristallines sont déterminés par diffraction des rayons X par rapport à une zéolithe de référence, en utilisant une procédure dérivée de la méthode ASTM D3906-97 « Détermination of Relative X-ray Diffraction Intensities of Faujasite-Type-Containing Materials ». On pourra se référer à cette méthode pour les conditions générales d'application de la procédure et, en particulier, pour la préparation des échantillons et des références.

Un diffractogramme est composé des raies caractéristiques de la fraction cristallisée de l'échantillon et d'un fond, provoqué essentiellement par la diffusion de la fraction amorphe ou microcristalline de l'échantillon (un faible signal de diffusion est lié à l'appareillage, air, porte-échantillon, etc.) Le taux de pics d'une zéolithe est le rapport, dans une zone angulaire prédéfinie (typiquement 8 à 40° 2θ lorsqu'on utilise le rayonnement Kα du cuivre, 1 = 0,154 nm), de l'aire des raies de la zéolithe (pics) sur l'aire globale du diffractogramme (pics + fond). Ce rapport pics/(pics + fond) est proportionnel à la quantité de zéolithe cristallisée dans le matériau. Pour estimer la fraction cristalline d'un échantillon de zéolithe Y, on comparera le taux de pics de l'échantillon à celui d'une référence considérée comme 100 % cristallisée (NaY par exemple). Le taux de pics d'une zéolithe NaY parfaitement cristallisée est de l'ordre de 0,55 à 0,60.

La densité de remplissage tassée (DRT) est mesurée de la manière décrite dans l'ouvrage " Applied Heterogenous Catalysis " de J.F. Le Page, J. Cosyns, P. Courty, E. Freund, J-P. Franck, Y. Jacquin, B. Juguin, C. Marcilly, G. Martino, J. Miquel, R. Montarnal, A. Sugier, H. Van Landeghem, Technip, Paris, 1987. Un cylindre gradué de dimensions acceptables est rempli de catalyseur par additions successives; et entre chaque addition, le catalyseur est tassé en secouant le cylindre jusqu'à atteindre un volume constant. Cette mesure est généralement réalisée sur 1000 cm3 de catalyseur tassé dans un cylindre dont le ratio hauteur sur diamètre est proche de 5:1. Cette mesure peut être, de manière préférée, réalisée sur des appareils automatisés tels que Autotap® commercialisé par Quantachrome®.

L'acidité de la matrice est mesurée par spectrométrie Infra-Rouge (IR). Les spectres IR sont enregistrés sur un interféromètre Nicolet de type Nexus-670 sous une résolution de 4 cm-1 avec une apodisation de type Happ-Gensel. L'échantillon (20 mg) est pressé sous la forme d'une pastille auto-supportée, puis est placé dans une cellule d'analyse in-situ (25°C à 550°C, four déporté du faisceau IR, vide secondaire de 10-6 mbar). Le diamètre de la pastille est de 16 mm.

L'échantillon est prétraité de la façon suivante afin d'éliminer l'eau physisorbée et de déshydroxyler partiellement la surface du catalyseur afin d'obtenir une image représentative de l'acidité du catalyseur en fonctionnement :

- montée en température de 25°C à 300°C en 3 heures
- palier de 10 heures à 300 °C
- descente de température de 300°C à 25°C en 3 heures

La sonde basique (pyridine) est ensuite adsorbée à pression saturante à 25°C puis thermo-désorbée selon les paliers suivants :

- 25°C pendant 2 heures sous vide secondaire
- 100°C 1 heure sous vide secondaire
- 200°C 1 heure sous vide secondaire
- 300°C 1 heure sous vide secondaire

Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (20 mg exactement). Le nombre de sites de Lewis est proportionnel à la surface du pic dont le maximum se situe vers 1450 cm-1, tout épaulement étant inclus. Le nombre de sites de Bronsted est proportionnel à la surface du pic dont le maximum se situe vers 1545 cm-1. Le rapport du nombre de sites de Bronsted /nombre de sites de Lewis B/L est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

Lorsqu'un élément dopant, P et/ou B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

La composition globale du catalyseur peut être déterminée par fluorescence X sur le catalyseur à l'état pulvérulent ou par absorption atomique après attaque acide du catalyseur.

La mesure de la composition locale à l'échelle du micron, par opposition à la composition globale du catalyseur, peut s'effectuer par microsonde électronique Cette mesure peut s'effectuer en déterminant les teneurs en métal sur des zones de quelques microns cubes le long du diamètre d'une particule de catalyseurs que l'on appelle unités de mesures. Cette mesure permet d'évaluer la répartition macroscopique des éléments à l'intérieur des particules. Elle peut être complétée éventuellement à l'échelle du nanomètre par STEM (Scanning Transmission Electron Microscopy (Microscopie de Transmission Electronique à Balayage)).

Les analyses sont conduites sur une microsonde électronique CAMECA SX100 (équipée de 5 spectromètres à dispersion de longueur d'onde)(appareillage préféré) ou éventuellement sur JEOL 8800R(4 spectromètres) Les paramètres d'acquisition sont les suivants : tension d'accélération 20 kV, courant 80 ou 200 nA et temps de comptage 10 s ou 20 s selon le niveau de concentration. Les particules sont enrobées dans la résine puis polies jusqu'à leur diamètre.

On notera que l'appellation diamètre ne se réfère pas uniquement à une forme en bille ou en extrudé, mais plus généralement à toute forme de particules ; est dénommée diamètre en fait la longueur représentative de la particule sur laquelle est effectuée la mesure.

Les mesures sont effectuées sur un échantillon représentatif du lit ou du lot de catalyseur qui sera utilisé sur un lit catalytique. On a considéré que les analyses devraient être faites sur au moins 5 particules avec au moins 30 mesures par particule, uniformément réparties le long du diamètre.

On appelle CMo, CNi, CW et CP les concentrations locales (exprimées en %) respectivement en Molybdène, Nickel, Tungstène et phosphore

On pourrait tout aussi bien exprimer les concentrations en % atomique, les fluctuations relatives étant les mêmes.

Il est intéressant de préparer des catalyseurs présentant des concentrations homogènes CMo, CNi, CW et CP le long de l'extrudé. Il est également intéressant de préparer des catalyseurs présentant des concentrations CMo, CNi, CW et CP au coeur et en périphérie différente. Ces catalyseurs présentent des profils de répartition dits en « cuvette » ou en « dôme ». Un autre type de répartition est celle en croûte où les éléments de la phase active sont répartis en surface.

**Description détaillée de l'invention**

Plus précisément, l'invention concerne un catalyseur comprenant :

- au moins un élément hydro-déshydrogénant choisi dans le groupe formé par les éléments du groupe VIB et du groupe VIII de la classification périodique,
- de 0,5 à 2,5% en poids d'oxyde de phosphore,
- et un support à base de zéolithe Y définie par un paramètre cristallin a de la maille élémentaire compris entre 24,40 x $10^{-10}$ m et 24,15 x $10^{-10}$ m et à base de silice - alumine contenant une quantité supérieure à 5% poids et inférieure ou égale à 95% poids de silice ($SiO_2$),

ledit catalyseur présentant les caractéristiques suivantes :

- un diamètre moyen poreux, mesuré par porosimétrie au mercure, compris entre 20 et 140 Å,
- un volume poreux total, mesuré par porosimétrie au mercure, compris entre 0,1 ml/g et 0,5 ml/g, de préférence inférieur à 0.45 ml/g et de manière plus préférée inférieur à 0.4 ml/g,
- un volume poreux total, mesuré par porosimétrie azote, compris entre 0,1 ml/g et 0,5 ml/g, de préférence inférieur à 0.45 ml/g et de manière plus préférée inférieur à 0.4 ml/g,
- une surface spécifique BET comprise entre 100 et 600m$^2$/g, de préférence inférieure à 500 m$^2$/g, de manière très préférée Inférieure à 350 m$^2$/g et de manière encore plus préférée Inférieure à 250 m$^2$/g,
- un volume poreux, mesuré par porosimétrie au mercure, compris dans les pores de diamètre supérieur à 140 Å inférieur à 0,1 ml/g,
- un volume poreux, mesuré par porosimétrie au mercure, compris dans les pores de diamètre supérieur à 160 Å inférieur à 0,1 ml/g,
- un volume poreux, mesuré par porosimétrie au mercure, compris dans les pores de diamètre supérieurs à 200 Å, inférieur à 0,1 ml/g, de préférence inférieur à 0,075 ml/g et de manière plus préférée inférieur à 0.05 ml/g,
- un volume poreux, mesuré par porosimétrie au mercure, compris dans les pores de diamètre supérieurs à 500 Å strictement supérieur à 0,01 ml/g et inférieur à 0,1 ml/g, de préférence supérieur à 0,02 ml/g et inférieur à 0,07 ml/g et de manière encore plus préférée supérieur à 0,03 ml/g et inférieur à 0,07 ml/g,

- un diagramme de diffraction X qui contient au moins les raies principales caractéristiques d'au moins une des alumines de transition comprise dans le groupe composé par les alumines alpha, rhô, khl, êta, gamma, kappa, thêta et delta.
- une densité de remplissage tassée des catalyseurs supérieure à 0,75 g/cm$^3$, de manière préférée supérieure à 0,85 g/cm$^3$, de manière très préférée supérieure à 0,95 cm$^3$/g et de manière encore plus préférée supérieure à 1,05 g/cm$^3$.

Selon la teneur en zéolithe introduite, le diagramme de diffraction X du catalyseur contient également de manière générale les raies principales caractéristiques de la ou des zéolithes choisies.

L'invention concerne également un procédé d'hydrocraquage et/ou d'hydroconversion, et un procédé d'hydrotraitement de charges hydrocarbonées avec lesdits catalyseurs.

*Caractéristiques du support du catalyseur selon l'invention*

Le support du catalyseur selon l'invention est un support zéolitique Y définie par un paramètre cristallin a de la maille élémentaire compris entre 24,40 x 10$^{-10}$ m et 24,15 x 10$^{-10}$ m à base d'alumine-silice (c'est-à-dire comprenant alumine et silice) de teneur massique en silice (SiO$_2$) supérieure à 5% poids et inférieure ou égale à 95% poids, de préférence comprise entre 10 et 80% poids, de manière préférée une teneur en silice supérieure à 20% poids et inférieure à 80% poids et de manière encore plus préférée supérieure à 25% poids et inférieure à 75% poids. La teneur en silice du support est avantageusement comprise entre 10 et 50 % poids.

Matrice

La matrice non zéolithique à base de silice-alumine utilisée dans le support de catalyseur selon l'invention est de préférence une alumine-silice homogène à l'échelle du micromètre et dans laquelle la teneur en impuretés cationiques (par exemple Na$^+$) est inférieure à 0,1 %poids, de manière préférée inférieure à 0,05% poids et de manière encore plus préférée inférieure à 0,025% poids et la teneur en impuretés anioniques (par exemple SO$_a$$^{2-}$, Cl$^-$) est inférieure à 1% poids, de manière préférée inférieure à 0,5% poids et de manière encore plus préférée inférieure à 0,1% poids.

Ainsi tout procédé de synthèse d'alumine-silice connu de l'homme du métier conduisant à une alumine-silice homogène à l'échelle du micromètre et dans lequel les impuretés cationiques (par exemple Na$^+$) peuvent être ramenées à moins de 0,1%, de manière préférée à une teneur inférieure à 0,05% poids et de manière encore plus préférée inférieure à 0,025% poids et dans lequel les impuretés anioniques (par exemple SO$_4$$^{2-}$, Cl$^-$) peuvent être ramenées à moins de 1% et de manière plus préférée à une teneur inférieure à 0,05% poids convient pour préparer les supports objet de l'invention.

L'environnement du silicium des alumines-silice est étudié par la RMN de $^{29}$Si. Les alumines-silice de l'invention sont composées de silicium de types Q$^2$, Q$^3$, Q$^{3-4}$ et Q$^4$. De nombreuses espèces sont de type Q$^2$, approximativement de l'ordre de 10 à 80%, de préférence 20 à 60 % et manière préférée de 20 à 40%. La proportion des espèces Q$^3$ et Q$^{3-4}$ est également importante, approximativement de l'ordre de 5 à 50 % et de manière préférée de 10 à 40% pour les deux espèces.

L'environnement des siliciums a été étudié par RMN CP MAS $^1$H->$^{29}$Si, (300 MHz, vitesse de rotation : 4000 Hz). Dans ce cas, seul le silicium lié à des liaisons OH doit répondre. La table des déplacements chimiques utilisés est celle de Kodakari et al., Langmuir, 14, 4623-4629, 1998. Les attributions sont les suivantes : -108 ppm (Q4), -99 ppm (Q$^3$/Q4(1 Al)), -91 ppm (Q3/Q3(1Al)) , -84 ppm (Q2/Q3(2Al), - 78 ppm (Q2/Q3(3Al) et -73 ppm Q1/Q2 (3 Al).

Les alumines-silice de l'invention se présentent généralement sous la forme de superposition de plusieurs massifs. Le pic principal de ces massifs est avantageusement situé à -110 ppm.

Les spectres RMN MAS du solide de $^{27}$Al des matrices selon l'invention montrent deux massifs de pics distincts. Un premier type d'aluminium dont le maximum résonne vers 10 ppm s'étend entre -100 et 20 ppm. La position du maximum suggère que ces espèces sont essentiellement de type Al$_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondrait aux atomes d'Al$_{IV}$ (tétraédrique). Pour les supports et catalyseurs de la présente invention, avantageusement, la proportion des Al$_{VI}$ octaédriques est supérieure à 50%, de manière préférée supérieure à 60%, et de manière encore plus préférée supérieure à 70%.

Dans un mode de réalisation de l'invention, le catalyseur contient une matrice comprenant au moins deux zones alumino-silicates, les dites zones ayant des rapports Si/Al inférieurs ou supérieurs au rapport Si/Al global déterminé par fluorescence X. Ainsi une matrice ayant un rapport Si/Al égal à 0,5 comprend par exemple deux zones alumino-silicates, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, le catalyseur contient une matrice comprenant une seule zone alumine-silice, ladite zone ayant un rapport Si/Al égal au rapport Si/Al global déterminé par fluorescence X et inférieur à 2,3.

**Zéolithe**

La zéolithe Y selon l'invention est caractérisée par un paramètre cristallin a de la maille élémentaire compris entre 24,40 x $10^{-10}$ m et 24,15 x $10^{-10}$ m et de manière préférée entre 24,38 x $10^{-10}$ m et 24,24 x $10^{-10}$m.

La teneur pondérale totale en zéolithe dans le catalyseur est généralement comprise entre 0.1% et 30%, avantageusement entre 0.2% et 25%, de préférence entre 0.3% et 20%, de manière très préférée entre 0.5% et 20% et de manière encore plus préférée entre 1 % et 10%.

Selon la teneur en zéolithe introduite, le diagramme de diffraction X du support ou du catalyseur contient également de manière générale les raies principales caractéristiques de la ou des zéolithes choisies.

La zéolithe Y selon l'invention peut également être une zéolithe Y ayant subi un traitement secondaire telles que par exemple la USY, VUSY, SDUSY.

La zéolithe Y utilisée dans les supports de catalyseurs selon l'invention est au moins en partie sous forme hydrogène ou acide (H+) ou ammonium ($NH_4^+$) ou cationique, ledit cation étant choisi dans le groupe formé par les groupes IA, IB, IIA, IIB, IIIA, IIIB (y compris les terres rares), Sn, Pb et Si, elle est de préférence au moins en partie sous forme H+ ou elle peut aussi être utilisée au moins en partie sous forme cationique (telle que définie ci-dessus).

L'acidité du support (matrice + zéolithe) selon l'invention peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est supérieur à 0.07, de manière préférée supérieur à 0.125 et de manière très préférée supérieur à 0.25.

*Caractéristiques du catalyseur selon l'invention*

Le catalyseur selon l'invention comprend donc :

- un support à base de zéolithe Y définie par un paramètre cristallin a de la maille élémentaire compris entre 24,40 x $10^{-10}$ m et 24,15 x $10^{-10}$ m et à base d'alumine-silice (c'est-à-dire comprenant alumine et silice) de teneur massique en silice ($SiO_2$) supérieure à 5% poids et inférieure ou égale à 95% poids, de préférence comprise entre 10 et 80% poids, de manière préférée une teneur en silice supérieure à 20% poids et inférieure à 80% poids et de manière encore plus préférée supérieure à 25% poids et inférieure à 75% poids, la teneur en silice est avantageusement comprise entre 10 et 50 % poids,

- de préférence une teneur en impuretés cationiques inférieure à 0,1%poids, de manière préférée inférieure à 0,05% poids et de manière encore plus préférée inférieure à 0,025% poids. On entend par teneur en impuretés cationiques la teneur totale en alcalins.

- de préférence une teneur en impuretés anioniques inférieure à 1 % poids, de manière préférée inférieure à 0,5% poids et de manière encore plus préférée inférieure à 0,1 % poids.

- au moins un élément hydro-déshydrogénant choisi dans le groupe formé par les éléments du groupe VIB et du groupe VIII de la classification périodique,

- de préférence une teneur massique en métal(aux) du groupe VIB, sous forme métallique ou sous forme oxyde comprise entre 1 et 50 % en poids, de manière préférée entre 1,5 et 35 %, et de manière encore plus préférée entre 1,5 et 30%,

- de préférence une teneur massique en métaux du groupe VIII, sous forme métallique ou sous forme oxyde comprise entre 0,1 et 30 % en poids, de manière préférée entre 0,2 et 25 % et de manière encore plus préférée entre 0,2 et 20%, de 0,5 à 2,5% poids d'oxyde de phosphore

- éventuellement au moins un élément du groupe VIIB (manganèse par exemple et de préférence), et une teneur pondérale comprise entre 0 et 20%, de préférence entre 0 et 10 % du composé sous forme oxyde ou métal.

- éventuellement au moins un élément du groupe VB (niobium par exemple et de préférence), et une teneur pondérale comprise entre 0 et 40%, de préférence entre 0 et 20% du composé sous forme oxyde ou métal,

- un diamètre moyen poreux, mesuré par porosimétrie au mercure, compris entre 20 et 140 Å, de préférence entre 40 et 120 Å et de manière encore plus préférée entre 50 et 100 Å,

- de préférence un rapport entre le volume V2, mesuré par porosimétrie au mercure, compris entre le $D_{moyen}$ - 30 Å et le $D_{moyen}$ + 30 Å, sur le volume poreux total également mesuré par porosimétrie au mercure supérieur à 0,6, de préférence supérieur à 0,7 et de manière encore plus préférée supérieur à 0,8.

- de préférence un volume V3 compris dans les pores de diamètres supérieurs à $D_{moyen}$ + 30 Å. mesuré par porosimétrie au mercure, inférieur à 0,1 ml/g, de manière préférée inférieur à 0,06 ml/g et de manière encore plus préférée inférieur à 0,04 ml/g.

- de préférence un rapport entre le volume V5 compris entre le $D_{moyen}$ - 15 Å et le $D_{moyen}$ + 15 Å mesuré par porosimétrie au mercure, et le volume V2 compris entre le $D_{moyen}$ - 30 Å et le $D_{moyen}$ + 30 Å, mesuré par porosimétrie au mercure, supérieur à 0,6, de manière préférée supérieur à 0,7 et de manière encore plus préférée supérieur à 0,8.

- de préférence un volume V6 compris dans les pores de diamètres supérieurs à $D_{moyen}$ + 15 Å, mesuré par porosimétrie au mercure, inférieur à 0,2 ml/g, de manière préférée inférieur à 0,1 ml/g et de manière encore plus préférée inférieur à 0,05 ml/g.

- un volume poreux total, mesuré par porosimétrie au mercure, compris entre 0,1 ml/g et 0,5 ml/g, de préférence inférieur à 0.45 ml/g et de manière plus préférée inférieur à 0.4 ml/g,

- un volume poreux total, mesuré par porosimétrie azote, compris entre 0,1 ml/g et 0,5 ml/g, de préférence inférieur à 0.45 ml/g et de manière plus préférée inférieur à 0.4 ml/g,

- une surface spécifique BET comprise entre 100 et 600 $m^2$/g , de préférence inférieure à 500 $m^2$/g, de manière très préférée inférieure à 350 $m^2$/g et de manière encore plus préférée inférieure à 250 $m^2$/g,

- de préférence une surface adsorption telle que le rapport entre la surface adsorption et la surface BET soit supérieur à 0,5, de manière préférée supérieur à 0,65 et de manière plus préférée supérieur à 0,8.

- un volume poreux, mesuré par porosimétrie au mercure, compris dans les pores de diamètre supérieur à 140 Å inférieur à 0,1 ml/g, de préférence inférieur à 0,07 ml/g et de manière encore plus préférée inférieur à 0,05 ml/g.

- un volume poreux, mesuré par porosimétrie au mercure, compris dans les pores de diamètre supérieur à 160 Å inférieur à 0,1 ml/g, de préférence inférieur à 0,07 ml/g et de manière encore plus préférée inférieur à 0,05 ml/g.

- un volume poreux, mesuré par porosimétrie au mercure, compris dans les pores de diamètre supérieurs à 200 Å, inférieur à 0,1 ml/g, de préférence inférieur à 0,075 ml/g et de manière plus préférée inférieur à 0.05 ml/g,

- un volume poreux, mesuré par porosimétrie au mercure, compris dans les pores de diamètre supérieurs à 500 Å strictement supérieur à 0,01 ml/g et inférieur à 0,1 ml/g, de préférence supérieur à 0,02 ml/g et inférieur à 0,07 ml/g et , et de manière encore plus préférée supérieur à 0,03 ml/g et inférieur à 0,07 ml/g,

- un diagramme de diffraction X qui contient au moins les raies principales caractéristiques d'au moins une des alumines de transition comprises dans le groupe composé par les alumines rhô, khi, kappa, êta, gamma, thêta et delta, de manière préférée qui contient au moins les raies principales caractéristiques d'au moins une des alumines de transition compris dans le groupe composé par l'alumine gamma, êta, thêta et delta, et de manière plus préférée qui contient au moins les raies principales caractéristiques de l'alumine gamma et êta, et de manière encore plus préférée qui contient les pics à un d compris entre 1,39 à 1,40 Å et à un d compris entre 1,97 Å à 2,00 Å.

- une densité de remplissage tassée des catalyseurs supérieure à 0,75 g/$cm^3$, de manière préférée supérieure à 0,85 g/$cm^3$, de manière très préférée supérieure à 0,95 g/$cm^3$ et de manière encore plus préférée supérieure à 1,05 g/$cm^3$.

La teneur pondérale totale en zéolithe Y dans le catalyseur est généralement comprise entre 0.1% et 30%, avantageusement entre 0.2% et 25%, de préférence entre 0.3% et 20%, de manière très préférée entre 0.5% et 20% et de manière encore plus préférée entre 1 % et 10%.

Selon la teneur en zéolithe introduite, le diagramme de diffraction X du catalyseur contient également de manière générale les raies principales caractéristiques de la ou des zéolithes choisies.

La zéolithe Y selon l'invention peut également être une zéolithe Y ayant subi un traitement secondaire telles que par exemple la USY, VUSY, SDUSY.

La zéolithe Y selon l'invention est caractérisée par un paramètre cristallin a de la maille élémentaire compris entre 24,40 x $10^{-10}$ m et 24,15 x $10^{-10}$ m et de manière préférée entre 24,38 x $10^{-10}$ m et 24,24 x $10^{-10}$m.

La zéolithe Y utilisée dans les catalyseurs selon l'invention est au moins en partie sous forme hydrogène ou acide (H+) ou ammonium ($NH_4^+$) ou cationique, ledit cation étant choisi dans le groupe formé par les groupes IA, IB, IIA, IIB, IIIA, IIIB (y compris les terres rares), Sn, Pb et Si, elle est de préférence au moins en partie sous forme H+ ou elle peut aussi être utilisé au moins en partie sous forme cationique (telle que définie ci-dessus).

L'élément dopant est le phosphore, la teneur en phosphore est avantageusement comprise entre 0,5 et 2,5%.

De préférence, le catalyseur est à base de molybdène et de tungstène et/ou de nickel et de tungstène.

Le catalyseur peut également contenir une proportion mineure d'au moins un élément stabilisant choisi dans le groupe formé par la zircone et le titane.

Le catalyseur selon l'invention présente une meilleure activité sans perte de sélectivité en distillats moyens. Sans vouloir être lié par une quelconque théorie, il semble que cette activité particulièrement élevée sans perte notable de la sélectivité des catalyseurs de la présente invention soit due à l'effet de synergie entre la zéolithe, la matrice silico-aluminique et la phase hydrogénante améliorée

*Test standard d'activité : évaluation des catalyseurs selon l'invention*

L'acidité et la performance en hydrogénation des catalyseurs selon l'invention peuvent être évaluées par un test catalytique d'un mélange de molécules modèles : l'hydrogénation du toluène et l'isomérisation du cyclohexane.

Le test catalytique permettant de contrôler l'hydrogénation et l'acidité des catalyseurs est réalisé selon le protocole suivant :

Les catalyseurs sont sulfurés in situ en dynamique dans un réacteur tubulaire à lit fixe traversé d'une unité pilote de type catatest (constructeur Vinci Technologies), les fluides circulant de haut en bas. Les mesures d'activité hydrogénante et isomérisante sont effectuées immédiatement après la sulfuration sous pression sans remise à l'air avec la charge d'hydrocarbures qui a servi à sulfurer les catalyseurs.

La charge de sulfuration et de test est composée de 5,8 % de diméthyl disulfure (DMDS), 20 % de toluène et 74,2 % de cyclohexane en poids. On mesure ainsi les activités catalytiques stabilisées de volumes égaux de catalyseurs dans la réaction d'hydrogénation du toluène. Le suivi de l'isomérisation du cyclohexane, diluant du toluène, permet d'estimer l'acidité des catalyseurs.

Les conditions de mesure d'activité sont les suivantes (en considérant une vaporisation totale et la loi des gaz parfaits) :

Pression totale : 6,0 MPa
Pression de toluène : 0,38 MPa
Pression de cyclohexane : 1,55 MPa
Pression d'hydrogène : 3,64 MPa
Pression d'$H_2$S : 0,22 MPa
Volume de catalyseur : 40 cc
Débit de charge : 80 cc/h
Vitesse spatiale horaire : 2 l/l/h$^{-1}$
Débit d'hydrogène : 36 l/h
Température de sulfuration et de test : 350°C (3°C/min).

Des prélèvements de l'effluent liquide sont analysés par chromatographie en phase gazeuse. La détermination des concentrations molaire en toluène non converti (T) et des concentrations des produits d'hydrogénation : le méthyle cyclohexane (MCC6), l'éthyle cyclopentane (EtCC5) et les diméthyle cyclopentane (DMCC5) permettent de calculer un taux d'hydrogénation de toluène $X_{HYD}$ défini par :

$$X_{HYD} (\%) = 100 * (MCC6 + EtCC5 + DMCC5) / (T + MCC6 + EtCC5 + DMCC5)$$

Le taux d'isomérisation du cyclohexane $X_{ISO}$ est calculé de la même façon à partir des concentrations en cyclohexane non converti et de son produit de réaction, le méthyl cyclopentane. La réaction d'hydrogénation du toluène et d'isomérisation du cyclohexane étant d'ordre 1 dans nos conditions de test et le réacteur se comportant comme un réacteur piston idéal, on calcule l'activité hydrogénante $A_{HYD}$ et isomérisante $A_{ISO}$ des catalyseurs en appliquant la formule : $Ai = \ln(100/(100-X_i))$

Avantageusement, le catalyseur selon l'invention possède dans le test standard d'activité une activité $A_{HYD} > 0.7$, de manière préférée $A_{HYD} > 0.9$, de manière plus préférée $A_{HYD} > 1.2$ et de manière encore plus préférée $A_{HYD} > 1.4$.

*Procédés de préparation*

Les catalyseurs selon l'invention peuvent être préparés selon toutes les méthodes bien connues de l'homme du métier.

**Méthodes de préparation**

Matrice

Le demandeur a découvert que les supports zéolithiques Y ayant un paramètre cristallin a de la maille élémentaire contrôlé et compris entre $24,40 \times 10^{-10}$ m et $24,15 \times 10^{-10}$ m à base de matrices silico-aluminiques obtenues à partir d'un mélange à quelque étape que ce soit d'un composé d'alumine partiellement soluble en milieu acide avec un composé de silice totalement soluble ou avec une combinaison totalement soluble d'alumine et de silice hydratées, mise en forme suivie d'un traitement hydrothermal ou thermique afin de l'homogénéiser à l'échelle micrométrique, voire à l'échelle nanométrique permettaient d'obtenir un catalyseur particulièrement actif dans les procédés d'hydrocraquage. Par partiellement soluble en milieu acide, le demandeur entend que la mise en contact du composé d'alumine avant toute addition du composé de silice (généralement totalement soluble) ou de la combinaison avec une solution acide par exemple d'acide nitrique ou d'acide sulfurique provoque leur dissolution partielle.

Sources de silice

Les composés de silice utilisés selon l'invention peuvent avoir été choisis dans le groupe formé par l'acide silicique, les sols ou les poudrés d'acide silicique, les silicates alcalins hydrosolubles, les sels cationiques de silicium, par exemple le métasilicate de sodium hydraté, le Ludox® sous forme ammoniacale ou sous forme alcaline, les silicates d'ammonium quaternaire. Le sol de silice peut être préparé selon l'une des méthodes connues de l'homme de l'art. De manière préférée, une solution d'acide orthosilicique décationisée est préparée à partir d'un silicate alcalin hydrosoluble par échange ionique sur une résine.

Sources de silice-alumines totalement solubles

Les silice-alumines hydratées totalement solubles utilisées selon l'invention peuvent être préparées par coprécipitation vraie en conditions opératoires stationnaires maîtrisées (pH, concentration, température, temps de séjour moyen) par réaction d'une solution basique contenant le silicium, par exemple sous forme de silicate de sodium, optionnellement de l'aluminium par exemple sous forme d'aluminate de sodium avec une solution acide contenant au moins un sel d'aluminium par exemple le sulfate d'aluminium. Au moins un carbonate ou encore du $CO_2$ peut éventuellement être rajouté au milieu réactionnel.

Par coprécipitation vraie, le demandeur entend un procédé par lequel au moins un composé d'aluminium totalement soluble en milieu basique ou acide comme décrit ci-après, au moins un composé de silicium comme décrit ci-après sont mis en contact, simultanément ou séquentiellement, en présence d'au moins un composé précipitant et/ou coprécipitant de façon à obtenir une phase mixte essentiellement constituée de silice-alumine hydratée laquelle est éventuellement homogénéisée par agitation intense, cisaillement, broyage colloïdal ou encore par combinaison de ces opérations unitaires. Par exemple, ces silices-alumines hydratées peuvent avoir été préparées selon les enseignements des brevets américains US 2 908 635; US 3 423 332, US 3 433 747, US 3 451 947, US 3 629 152, US 3 650 988.

La dissolution totale du composé de silice ou de la combinaison a été évaluée de manière approchée selon la méthode suivante. Une quantité fixée (15 g) du composé de silice ou de la combinaison hydratée est introduite dans un milieu de pH préétabli. De manière préférée, la concentration de solide rapporté par litre de suspension est 0,2 mole par litre. Le pH de la solution de dispersion est au moins de 12 et il peut être obtenu par utilisation d'une source alcaline. De manière préférée, il est intéressant d'utiliser NaOH. Le mélange est ensuite agité mécaniquement par un agitateur à turbine de type défloculeuse pendant 30 minutes à 800 t/min. Une fois, l'agitation terminée, le mélange est centrifugé 10 minutes à 3000 t/min. Le gâteau est séparé du liquide surnageant. La solution a été filtré sur un filtre de porosité 4 de diamètre 19 cm. On procède ensuite au séchage puis à la calcination à 1000°C des 2 fractions. Puis, on définit un rapport R égal en divisant la masse décantée par la masse de solide en suspension. Par totalement soluble, on entend un rapport R au moins supérieur à 0,9.

Sources d'alumine

Les composés d'alumine utilisés selon l'invention sont partiellement solubles en milieu acide. Ils sont choisis tout ou en partie dans le groupe des composés d'alumine de formule générale $Al_2O_3$, $nH_2O$. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, chi, eta, gamma, kappa, thêta, et delta, qui se différencient essentiellement par l'organisation de leur structure cristalline. L'alumine alpha appelée communément corindon peut être incorporée dans une faible proportion dans le support selon l'invention.

Cette propriété de dissolution partielle est une propriété recherchée de l'invention, elle s'applique aux poudres d'alumine hydratées, aux poudres atomisées d'alumine hydratées, aux dispersions ou suspensions d'alumine hydratées ou à l'une quelconque de leur combinaison, avant une quelconque addition d'un composé contenant tout ou en partie du silicium.

La dissolution partielle du composé d'alumine a été évaluée de manière approchée selon la méthode suivante. Une quantité précise du composé d'alumine en poudre ou en suspension est introduite dans un milieu de pH préétabli. Le mélange est ensuite agité mécaniquement. Une fois, l'agitation terminée, le mélange est laissé sans agitation durant 24 heures. De manière préférée, la concentration de solide en $Al_2O_3$ rapportée par litre de suspension est 0,5 mole par litre. Le pH de la solution de dispersion est de 2 et est obtenu soit par utilisation de $HNO_3$, soit de HCl, soit de $HClO_4$. De manière préférée, il est intéressant d'utiliser $HNO_3$. La répartition des fractions sédimentées et dissoutes a été suivie par dosage de l'aluminium par absorption UV. Les surnageants ont été ultrafiltrés (membrane de polyetherssulfones, Millipore NMWL : 30 000) et digérés dans de l'acide concentré. La quantité d'aluminium dans le surnageant correspond au composé d'alumine non sédimentée et à l'aluminium dissous et la fraction ultrafiltrée à l'aluminium dissous uniquement. La quantité de particules sédimentées est déduite de la concentration théorique en aluminium dans la dispersion (en considérant que tout le solide introduit est dispersé) et des quantités de boehmite réellement dispersées et d'aluminium en solution.

Les précurseurs d'alumine utilisés selon la présente invention se distinguent donc de ceux utilisés dans le cas des co-précipitations vraies, qui sont entièrement solubles en milieu acide : sels cationiques d'alumine, par exemple le nitrate d'aluminium. Les méthodes faisant partie de l'invention se distinguent des co-précipitations vraies car l'un des éléments, en l'occurrence le composé d'aluminium, est partiellement soluble.

Pour mettre en oeuvre l'alumine, tout composé d'alumine de formule générale $Al_2O_3$, $nH_2O$ peut être utilisé. Sa surface spécifique est comprise entre 150 et 600 m²/g. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, chi, eta, gamma, kappa, thêta, delta et alpha, qui se différencient essentiellement par l'organisation de leur structure cristalline. Lors de traitements thermiques, ces différentes formes sont susceptibles d'évolution entre elles, selon une filiation complexe qui dépend des conditions opératoires du traitement. On peut également utiliser dans des proportions mesurées l'alumine alpha appelée communément corindon.

L'hydrate d'aluminium $Al_2O_3$, $nH_2O$ utilisé de manière plus préférentielle est la boehmite, la pseudo-boehmite et les gels d'alumine amorphe ou essentiellement amorphe. Un mélange de ces produits sous quelque combinaison que ce soit peut être également utilisé.

La boehmite est généralement décrite comme un monohydrate d'aluminium de formule $Al_2O_3$, $nH_2O$ qui englobe en réalité un large continuum de matériaux de degré d'hydratation et d'organisation variables avec des frontières plus ou moins bien définies : la boehmite gélatineuse la plus hydratée, avec n pouvant être supérieur à 2, la pseudo-boehmite ou la boehmite micro-cristalline avec n compris entre 1 et 2, puis la boehmite cristalline et enfin la boehmite bien cristallisée en gros cristaux avec n voisin de 1. La morphologie du monohydrate d'aluminium peut varier dans de larges limites entre ces deux formes extrêmes aciculaire ou prismatique. Tout un ensemble de forme variables peut être utilisé entre ces deux formes : chaîne, bateaux, plaquettes entrelacées.

La préparation et/ou la mise en forme de l'hydrate d'aluminium peuvent ainsi constituer la première étape de la préparation de ces catalyseurs. De nombreux brevets relatent la préparation et/ou la mise en forme de supports à base d'alumine de transition issues de monohydrate d'aluminium: US 3 520 654; US3630670; US3864461 ; US4154812; US4313923; DE3243193; US4371 513.

Des hydrates d'aluminium relativement purs peuvent être utilisés sous forme de poudre, amorphes ou cristallisés ou cristallisés contenant une partie amorphe. L'hydrate d'aluminium peut également être introduit sous forme de suspensions ou dispersions aqueuses. Les suspensions ou dispersions aqueuses d'hydrate d'aluminium mise en oeuvre selon l'invention peuvent être gélifiables ou coagulables. Les dispersions ou suspensions aqueuses peuvent également être obtenues ainsi qu'il est bien connu de l'homme de l'art par peptisation dans l'eau ou l'eau acidulée d'hydrates d'aluminium.

La dispersion d'hydrate d'aluminium peut être réalisée par tout procédé connu de l'homme de l'art: dans un réacteur en batch, un mélangeur en continu, un malaxeur, un broyeur colloïdal. Un tel mélange peut être également réalisé dans un réacteur à écoulement piston et, notamment dans un mélangeur statique. On peut citer les réacteurs Lightnin.

En outre, on peut également mettre en oeuvre comme source d'alumine une alumine ayant été soumise au préalable à un traitement susceptible d'améliorer son degré de dispersion. A titre d'exemple, on pourra améliorer la dispersion de la source d'alumine par un traitement d'homogénéisation préliminaire. Par homogénéisation, on peut utiliser au moins un des traitements d'homogénéisation décrit dans le texte qui suit.

Les dispersions ou suspensions aqueuses d'alumine que l'on peut mettre en oeuvre sont notamment les suspensions ou dispersions aqueuses de boehmites fines ou ultra-fines qui sont composés de particules ayant des dimensions dans le domaine colloïdal.

Les boehmites fines ou ultra-fines mises en oeuvre selon la présente invention peuvent notamment avoir été obtenues selon le brevet français FR - 1 261 182 et FR - 1 381 282 ou dans la demande de brevet européen EP 15 196.

On peut mettre en oeuvre également les suspensions ou dispersions aqueuses obtenues à partir de pseudo-boehmite, de gels d'alumine amorphe, de gels d'hydroxyde d'aluminium ou d'hydrargillite ultra-fine.

Le monohydrate d'aluminium peut être acheté parmi une variété de sources commerciales d'alumine telle que notamment les PURAL®, CATAPAL®, DISPERAL®, DISPAL® commercialisée par la société SASOL ou encore HIQ® commercialisée par ALCOA, ou selon les méthodes connues de l'homme de l'art : elle peut être préparée par déshydratation partielle de trihydrate d'aluminium par des méthodes conventionnelles ou elle peut être préparée par précipitation. Lorsque ces alumines se présentent sous forme d'un gel, elles sont peptisées par l'eau ou une solution acidulée. Dans la précipitation, la source acide peut-être par exemple choisie parmi au moins un des composés suivants : le chlorure d'aluminium, le sulfate d'aluminium, le nitrate d'aluminium. La source basique d'aluminium peut être choisie parmi les sels basiques d'aluminium tels que l'aluminate de sodium et l'aluminate de potassium.

Comme agents précipitants, l'hydroxyde de sodium, le carbonate de sodium, la potasse et l'ammoniaque peuvent être utilisés. Les agents précipitants sont choisis de telle manière que la source d'alumine selon la présente invention et ces agents soient précipités ensemble.

Selon la nature acide ou basique du composé de départ à base d'aluminium, on précipite l'hydrate d'aluminium à l'aide d'une base ou d'un acide choisi, par exemple parmi l'acide chlorhydrique, l'acide sulfurique, la soude ou un composé basique ou acide de l'aluminium tel que cités ci-dessus. Les deux réactifs peuvent être le sulfate d'aluminium et l'aluminate de soude. Pour un exemple de préparation de alpha-monohydrate d'aluminium utilisant le sulfate d'aluminium et l'aluminate de soude, on peut se référer notamment au brevet US 4 154 812.

La pseudo-boehmite peut notamment avoir été préparée selon le procédé décrit dans le brevet américain US 3 630 670 par réaction d'une solution d'aluminate alcalin avec une solution d'un acide minéral. La pseudo-boehmite peut notamment avoir été préparée selon le procédé décrit dans le brevet américain US 3 630 670 par réaction d'une solution d'aluminate alcalin avec une solution d'un acide minéral. Elle peut également avoir été préparée tel que décrit dans le brevet français FR 1 357 830.

Les gels d'alumine amorphe peuvent notamment avoir été préparés selon les procédés décrits dans l'article "Alcoa paper n°19 (1972) pages 9 à 12" et notamment par réaction d'aluminate d'acide ou d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les procédés décrits dans les brevets américains US 3 268 295 et US 3 245 919.

Les gels d'hydroxyde d'aluminium peuvent notamment être ceux préparés selon les procédés décrits dans le brevet WO 00/01617, par mélange d'une source acide d'aluminium et d'une base ou d'une source basique d'aluminium et d'un acide de manière à précipiter un monohydrate d'alumine, les étapes suivantes étant :

2. mûrissement
3.filtration
4. lavage, et
5. séchage,

procédés caractérisés en ce que le mélange de l'étape une est réalisé sans rétromélange.

L'hydrargilite ultra-fine peut notamment avoir été préparée selon le procédé décrit dans le brevet US 1 371 808, par évolution à une température comprise entre la température ambiante et 60°C de gels d'alumine sous forme de gâteau et contenant par rapport à l'alumine compté en molécules d'$Al_2O_3$ 0,1 ions acides monovalents.

On peut également mettre en oeuvre les suspensions ou dispersions aqueuses de boehmite ou de pseudo-boehmite ultra-pures préparées selon un procédé dans lequel on effectue la réaction d'un aluminate alcalin avec de l'anhydride carbonique pour former un précipité d'hydroxycarbonate d'aluminium amorphe, on sépare le précipité obtenu par filtration puis on lave celui-ci (le procédé est notamment décrit dans le brevet américain US 3 268 295).

Ensuite,

a) dans une première étape, on mélange le précipité lavé d'hydroxycarbonate d'aluminium amorphe avec une solution acide, d'une base ou d'un sel ou de leurs mélanges; ce mélange est effectué en versant la solution sur l'hydroxycarbonate, le pH du milieu ainsi constitué étant inférieur à 11,

b) dans une deuxième étape, on chauffe le milieu réactionnel ainsi constitué à une température inférieure à 90°C pendant un temps d'au moins 5 minutes

c) dans une troisième étape, on chauffe le milieu résultant de la deuxième étape à une température comprise entre 90°C et 250°C.

Les dispersions ou suspensions de boehmite et pseudo-boehmite obtenus selon ce procédé présentent une teneur en alcalins inférieure à 0,005% exprimée sous forme de rapport pondéral oxyde du métal alcalin /$Al_2O_3$.

Lorsqu'on désire fabriquer des supports de catalyseurs très purs, on utilise de préférence des suspensions ou dispersions de boehmites ou de pseudo-boehmites ultra-pures qui ont été obtenues selon le procédé qui a été décrit ci-dessus, ou les gels d'hydroxyde d'aluminium qui ont été préparés à partir de l'hydrolyse des alcoolates d'aluminium selon un procédé du type décrit dans le brevet américain US 2 892 858.

On décrit sommairement le procédé de fabrication qui conduit à de tels gels d'hydroxyde d'aluminium de type boehmite obtenue comme sous-produit dans la fabrication de l'alcool par hydrolyse d'un alcoolate ou alcoxyde d'aluminium (synthèse de Ziegler). Les réactions de synthèse d'alcools Ziegler sont décrites notamment dans le brevet américain US 2 892 858. Selon ce procédé, on prépare tout d'abord le triéthylaluminium à partir d'aluminium, d'hydrogène et d'éthylène, la réaction étant réalisée en deux étapes avec recyclage partiel du triéthylaluminium.

On ajoute de l'éthylène dans l'étape de polymérisation et on oxyde ensuite le produit obtenu en alcoolate d'aluminium, les alcools étant obtenus par hydrolyse.

Les gels d'hydroxyde d'aluminium peuvent également être ceux qui ont été préparés selon les procédés décrits dans les brevets américains US 4 676 928-A et US 6 030 599.

L'alumine hydratée obtenue comme sous-produit de la réaction de Ziegler est notamment décrite dans un bulletin de la société CONOCO du 19 janvier 1971.

La dimension des particules d'alumine constituant la source d'alumine peut varier dans de larges limites. Elle est généralement comprise entre 1 et 100 microns.

Méthodes de préparation de la matrice

La matrice peut être avantageusement préparée par l'une des méthodes décrites ci-après.

A titre d'exemple, une méthode de préparation d'une silice-alumine faisant partie de l'invention consiste à préparer à partir d'un silicate alcalin hydrosoluble une solution d'acide orthosilicique ($H_2SiO_4$, $H_2O$ décationisée par échange ionique puis à l'ajouter simultanément à un sel cationique d'aluminium en solution par exemple le nitrate et à de l'ammoniaque dans des conditions opératoires contrôlées ; ou encore ajouter la solution d'acide orthosilicique au sel cationique d'aluminium en solution et à coprécipiter la solution obtenue obtenue par de l'ammoniaque dans des conditions opératoires contrôlées conduisant à un produit homogène. Cet hydrogel de silice-alumine est mélangé avec de la poudre ou une suspension d'hydrate d'aluminium. Après filtration et lavage, séchage avec mise en forme puis calcination préférentiellement sous air, en four rotatif, à température élevée et pendant un temps suffisant pour favoriser les interactions entre l'alumine et la silice, généralement au moins 2 heures, une matrice répondant aux caractéristiques de l'invention est obtenue.

Une autre méthode de préparation de silice-alumine selon l'invention consiste à précipiter l'hydrate d'alumine comme ci-avant, à le filtrer et le laver puis à le mélanger avec l'acide orthosilicique aqueux de façon à obtenir une suspension, laquelle est intimement homogénéisée par forte agitation et cisaillement. Une turbine Ultraturrax ou encore une turbine Staro peut être utilisée, ou encore un broyeur colloïdal par exemple, un broyeur colloïdal Staro. La suspension homogène est alors séchée par atomisation comme ci-avant puis calcinée entre 500 et 1200°C pendant au moins 3 heures : une matrice silice-alumine utilisable dans le procédé selon l'invention est obtenue.

Une autre méthode faisant partie de l'invention consiste à préparer comme ci-avant une solution décationisée d'acide orthosilicique puis à l'ajouter simultanément ou consécutivement à un composé d'alumine, par exemple un hydrate d'aluminium en poudre ou en suspension acidulée. Afin d'augmenter le diamètre des pores du support silice-alumine final, au moins un composé basique peut éventuellement être rajouté au milieu réactionnel. Après une homogénéisation poussée de la suspension par agitation, ajustement éventuel par filtration de la teneur en matière sèche puis éventuellement ré-homogénéisation, le produit est séché avec mise en forme simultanément ou consécutivement, puis calciné comme ci-avant.

Une autre méthode faisant également partie de l'invention consiste à préparer une suspension ou une dispersion aqueuse d'alumine, par exemple un monohydrate d'aluminium puis à l'ajouter simultanément ou consécutivement à un composé de silice, par exemple un silicate de sodium. Afin d'augmenter le diamètre des pores de la matrice silice-alumine finale, au moins un composé basique peut éventuellement être rajouté au milieu réactionnel. La matrice est obtenue par filtration et lavage, éventuellement lavage par une solution ammoniacale pour extraire par échange ionique le sodium résiduel, séchage avec mise en forme simultanément ou consécutivement. Après séchage avec mise en forme puis calcination comme ci-avant, un support répondant aux caractéristiques de l'invention est obtenu. La taille des particules d'alumine utilisée est de préférence comprise entre 1 et 100 microns pour obtenir une bonne homogénéisation du support silice-alumine selon l'invention.

Pour augmenter le diamètre des mésopores de la matrice silice-alumine, il peut être particulièrement avantageux comme nous l'enseigne le brevet américain US 4 066 574 de préparer une suspension ou une dispersion aqueuse d'alumine, par exemple un monohydrate d'aluminium puis de neutraliser par une solution basique, par exemple de l'ammoniaque, puis à l'ajouter simultanément ou consécutivement à un composé de silice par exemple une solution décationisée d'acide orthosilicique. Après une homogénéisation poussée de la suspension par agitation intense, ajustement éventuel par filtration de la teneur en matière sèche puis ré-homogénéisation, le produit est séché avec mise en forme simultanément ou consécutivement, puis calciné comme ci-avant. Cette méthode fait également partie des méthodes utilisées selon l'invention.

Dans l'exposé des méthodes précitées, on emploie homogénéisation pour décrire la remise en solution d'un produit contenant une fraction solide par exemple une suspension, une poudre, un précipité filtré, puis sa dispersion sous agitation intense. L'homogénéisation d'une dispersion est un procédé bien connu de l'homme du métier. La dite-homogénéisation peut être réalisée par tout procédé connu de l'homme de l'art: à titre d'exemple dans un réacteur en batch, un mélangeur en continu, un malaxeur. Un tel mélange peut être réalisé dans un réacteur à écoulement piston et, notamment dans un réacteur statique. On peut citer les réacteurs Lightnin. Une turbine Ultraturrax® ou encore une turbine Staro® peut être utilisée, ou encore un broyeur colloïdal par exemple, un broyeur colloïdal Staro. Les broyeurs colloïdaux commerciaux IKA® peuvent être aussi utilisés.

Dans l'ensemble des méthodes précitées, il peut être éventuellement souhaitable d'ajouter, lors d'une étape quelconque de la préparation, une proportion mineure d'au moins un élément stabilisant choisi dans le groupe formé par la zircone et le titane. L'élément stabilisant est de préférence ajouté sous forme d'un sel soluble.

L'acidité de la matrice selon l'invention peut être de manière avantageuse, sans que cela ne restreigne la portée de l'invention, mesurée par suivi IR de la thermo-désorption de la pyridine. Généralement, le rapport B/L de la matrice selon l'invention est compris entre 0.05 et 1, de manière préférée entre à 0.05 et 0.7, de manière très préférée entre 0.06 et 0.3 et de manière encore plus préférée entre 0.075 et 0.15.

## Zéolithe

Les zéolithes de manière générale sont bénéfiques pour améliorer les performances du catalyseur en conversion. Toute zéolithe connue pour ses performances en hydrocraquage et/ou hydroconversion peut être utilisée dans les supports et catalyseurs objets de l'invention.

Selon un mode de réalisation de l'invention, mais sans pour autant restreindre la portée de l'invention, les zéolithes Y de structure faujasite (Zeolite Molecular Sieves Structure Chemistry and Uses, D.W. Breck, J.WILLEY and Sons, 1973) qui peuvent être sous forme hydrogène ou partiellement échangées avec des cations métalliques, par exemple à l'aide de cations des métaux alcalino-terreux et/ou de terres rares de numéro atomique 57 à 71 inclus, sont utilisées. Les zéolithes Y ayant un subi traitement secondaire font également partie de l'invention. Par traitement secondaire, on entend notamment les traitements décrits dans : "Hydrocracking, Science and Technology", J.Scherzer, A.J.Gruia, 1996 ou dans R.J.Beyerlein. Les zeolithes Y par exemple sont préparées selon les techniques généralement utilisées par la désalumination.

Les zéolithes Y utilisées généralement dans les catalyseurs d'hydrocraquage sont fabriquées par modification de zéolithe Na-Y disponible commercialement. Cette modification permet d'aboutir à des zéolithes qui sont dites stabilisées, ultra-stabilisées (USY), très ultrastabilisées (VUSY) ou encore désaluminées (SDUSY). Cette désignation est fréquente dans la littérature, mais elle ne restreint pas pour autant les caractéristiques des zéolithes de la présente invention à une telle appellation. Cette modification est réalisée par combinaison de trois types d'opérations connues de l'homme de l'art : le traitement hydrothermique, l'échange ionique et l'attaque acide. Le traitement hydrothermique est parfaitement défini par la conjonction des variables opératoires que sont la température, la durée, la pression totale et la pression partielle de vapeur d'eau. Ce traitement a pour effet d'extraire de la charpente silico-aluminique de la-zéolithe des atomes d'aluminium. La conséquence de ce traitement est une augmentation du rapport molaire $SiO_2/Al_2O_3$

de charpente et une diminution du paramètre de la maille cristalline.

L'échange ionique se déroule généralement par immersion de la zéolithe dans une solution aqueuse contenant des ions susceptibles de se fixer sur les sites d'échange cationique de la zéolithe. On enlève ainsi les cations sodium présents dans la zéolithe après cristallisation.

L'opération d'attaque acide consiste à mettre la zéolithe au contact d'une solution aqueuse d'un acide minéral. La sévérité de l'attaque acide est ajustée par la concentration en acide, la durée et la température. Réalisé sur une zéolithe traitée hydrothermiquement, ce traitement a pour effet d'éliminer les espèces aluminiques extraites de la charpente et qui bouchent la microporosité du solide.

Par ailleurs, un traitement hydrothermal particulier tel que décrit dans la demande de brevet US5601798 a pour effet d'accroître la mésoporosité des zéolithes Y, USY, VUSY et SDUSY, lesquelles zéolithes sont particulièrement intéressantes en combinaison avec la matrice amorphe décrite ci-dessus.

Différentes zéolithes Y peuvent être utilisées.

La zéolithe acide H-Y selon l'invention est caractérisée par différentes spécifications : un paramètre cristallin a de la maille élémentaire compris entre $24,40 \times 10^{-10}$ m et $24,15 \times 10^{-10}$ m et de manière préférée entre $24,38 \times 10^{-10}$ m et $24,24 \times 10^{-10}$m; un rapport molaire global $SiO_2/Al_2O_3$ compris entre environ 10 et 70 et de manière préférée entre environ 12 et 50 : une teneur en sodium inférieure à 0,15 % poids déterminée sur la zéolithe calcinée à 1100 °C ; une capacité CNa de reprise en ions sodium, exprimée en gramme de Na par 100 grammes de zéolithe modifiée, neutralisée puis calcinée, supérieure à environ 0,85 ; une surface spécifique déterminée par la méthode B.E.T. supérieure à environ 400 $m^2/g$ et de préférence supérieure à 550 $m^2/g$, une capacité d'adsorption de vapeur d'eau à 25 °C pour une pression partielle de 2,6 torrs (soit 34,6 MPa), supérieure à environ 6 %, et avantageusement, la zéolithe présente une répartition poreuse, déterminée par physisorption d'azote, comprenant entre 5 et 45 % et de préférence entre 5 et 40 % du volume poreux total de la zéolithe contenu dans des pores de diamètre situé entre $20 \times 10^{-10}$m et $80 \times 10^{-10}$m, et entre 5 et 45 % et de préférence entre 5 et 40 % du volume poreux total de la zéolithe contenu dans des pores de diamètre supérieur à $80 \times 10^{-10}$m et généralement inférieur à $1000 \times 10^{-10}$m, le reste du volume poreux étant contenu dans les pores de diamètre inférieur à $20 \times 10^{-10}$ m.

Un catalyseur préféré utilisant ce type de zéolithe renferme une matrice silico-aluminique, au moins une zéolithe Y désaluminée et possédant un paramètre cristallin compris entre $24,40 \times 10^{-10}$ m et $24,15 \times 10^{-10}$ m et de manière préférée entre $24,38 \times 10^{-10}$ m et $24,24 \times 10^{-10}$m, un rapport molaire $SiO_2/Al_2O_3$ global supérieur à 10, une teneur en cations des métaux alcalino-terreux ou alcalins et/ou des cations des terres rares telle que le rapport atomique $(n \times M^{n+})$/Al est inférieur à 0,8 de préférence inférieur à 0,5 ou encore à 0,1, une surface spécifique déterminée par la méthode B.E.T supérieure à 400 $m^2/g$ de préférence supérieure à 550 $m^2/g$, et une capacité d'adsorption d'eau à 25 °C pour une valeur P/Po de 0,2, supérieure à 6 % poids, ledit catalyseur comprenant également au moins un métal hydro-déshydrogénant, et du silicium déposé sur le catalyseur.

Dans un mode de réalisation avantageux selon l'invention, on utilise une zéolithe Y partiellement amorphe.

On entend par zéolithe Y partiellement amorphe, un solide présentant :

 i) un taux de pic qui est inférieur à 0,40 de préférence inférieur à environ 0,30 ;
 ii) une fraction cristalline exprimée par rapport à une zéolithe Y de référence sous forme sodique (Na) qui est inférieure à environ 60 %, de préférence inférieure à environ 50 %, et déterminée par diffraction des rayons X.

De préférence, les zéolithes Y partiellement amorphes, solides entrant dans la composition du catalyseur selon l'invention présentent l'une au moins (et de préférence toutes) des autres caractéristiques suivantes :

 iii) un rapport Si/Al global supérieur à 15, de préférence supérieur à 20 et inférieur à 150,
 iv) un rapport Si/Al$^{IV}$ de charpente supérieur ou égal au rapport Si/Al global
 v) un volume poreux au moins égal à 0,20 ml/g de solide dont une fraction, comprise entre 8 % et 50 %, est constituée de pores ayant un diamètre d'au moins 5 nm (nanomètre), soit 50 Å ;
 vi) une surface spécifique de 210-800 $m^2/g$ , de préférence 250-750 $m^2/g$ et avantageusement 300-600 $m^2/g$

Le taux de pics d'une zéolithe USY classique est de 0,45 à 0,55, sa fraction cristalline par rapport à une NaY parfaitement cristallisée est de 80 à 95 %. Le taux de pics du solide faisant l'objet de la présente description est inférieur à 0,4 et de préférence inférieur à 0,35. Sa fraction cristalline est donc inférieure à 70 %, de préférence inférieure à 60 %.

Les zéolithes partiellement amorphes sont préparées selon les techniques généralement utilisées pour la désalumination, à partir de zéolithes Y disponibles commercialement, c'est-à-dire qui présentent généralement des cristallinités élevées (au moins 80 %). Plus généralement on pourra partir de zéolithes ayant une fraction cristalline d'au moins 60 %, ou d'au moins 70 %.

Les zéolithes Y utilisées généralement dans les catalyseurs d'hydrocraquage sont fabriquées par modification de zéolithes Na-Y disponibles commercialement. Cette modification permet d'aboutir à des zéolithes dites stabilisées, ultra-stabilisées ou encore désaluminées. Cette modification est réalisée par l'une au moins des techniques de désalumination, et par exemple le traitement hydrothermique, l'attaque acide. De préférence, cette modification est réalisée par combinaison de trois types d'opérations connues de l'homme de l'art : le traitement hydrothermique, l'échange ionique et l'attaque acide.

Dans un autre méthode de réalisation préférée de l'invention, le support comprend une zéolithe telle que décrite dans la demande de brevet US 5, 601, 978. Ces zéolithes sont notamment décrites colonne 30, lignes 48-64. Leur volume mésoporeux est en particulier supérieur à 0.313 cm$^3$/g pour un paramètre de maille compris entre 24.3 et 24.4 Å.

La préparation et le ou les traitements ainsi que la mise en forme de la zéolithe peuvent ainsi constituer une étape de la préparation de ces catalyseurs.

L'introduction de la zéolithe peut se faire par toute technique connue de l'homme du métier lors de la préparation de la matrice ou lors de la mise en forme du support.

Préparation du catalyseur

Les catalyseurs selon l'invention peuvent être préparés selon toutes les méthodes bien connues de l'homme du métier.

Un procédé préféré de préparation du catalyseur selon la présente invention comprend les étapes suivantes :

La zéolithe peut être introduite selon toute méthode connue de l'homme de l'art et ce à tout stade la préparation du support ou du catalyseur.

Selon un mode de préparation préféré, la zéolithe peut être introduite au cours de la synthèse des précurseurs de la matrice. La zéolithe peut être, sans que cela soit limitatif, par exemple sous forme de poudre, poudre broyée, suspension, suspension ayant subi un traitement de désagglomération. Ainsi, par exemple, la zéolithe peut être mise en suspension acidulée ou non à une concentration ajustée à la teneur finale en zéolithe visée sur le support. Cette suspension appelée couramment une barbotine est alors mélangée avec les précurseurs de la matrice à un stade quelconque de sa synthèse comme décrite ci-dessus.

Selon un autre mode de préparation préférée, la zéolithe peut être introduite également lors de la mise en forme du support avec les éléments qui constituent la matrice avec éventuellement au moins un liant. La zéolithe peut être, sans que cela soit limitatif, peut être sous forme de poudre, poudre broyée, suspension, suspension ayant subi un traitement de désagglomération.

Les éléments des groupes VIB et/ou VIII, et le phosphore, peut être éventuellement introduit à ce stade de la préparation du catalyseur par toute méthode connue de l'homme du métier, Ils peuvent être également introduits après la mise en forme du support et ce après ou avant le séchage et la calcination du support.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme l'alumine-silice sans liant après un malaxage de cette dernière, puis passage de la pâte ainsi obtenue au travers d'une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage. Elle peut également être introduite par une ou plusieurs opérations d'échange ionique sur le support calciné constitué d'au moins une alumine-silice, éventuellement mise en forme avec un liant, à l'aide de solutions contenant les sels précurseurs des métaux choisis lorsque ceux-ci appartiennent au groupe VIII. Elle peut aussi être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite, de façon très préférée par une ou plusieurs opérations d'imprégnation du support calciné constitué d'au moins une alumine-silice selon l'invention et éventuellement d'au moins un liant, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur de la présente invention peut donc renfermer au moins un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel, le platine , le palladium et le ruthénium. Le catalyseur selon l'invention peut également renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, platine-palladium, les associations préférées sont : nickel-molybdène, cobalt-molybdène, cobalt-tungstène et encore plus avantageusement platine-palladium et nickel-tungstène. Il est également possible d'utiliser des associations de trois métaux par exemple nickel-cobalt-molybdène, nickel-molybdène-tungstène, nickel-cobalt-tungstène. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférées étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Le phosphore est introduit dans le catalyseur à tout niveau de la préparation et selon toute technique connue de l'homme du métier.

Une méthode préférée selon l'invention consiste à déposer le ou les éléments dopants choisis, par exemple le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur alumine-silice, il est possible d'imprégner ce précurseur par de la solution aqueuse de biborate d'ammonium et de silicone Rhodorsil E1P de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

Le phosphore peut être introduit par une ou plusieurs opérations d'imprégnation avec excès de solution sur le précurseur calciné.

Lorsque le P est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

Il est intéressant de préparer des catalyseurs présentant des concentrations homogènes $C_{Mo}$, $C_{NI}$, $C_W$ et $C_P$ le long de l'extrudé. Il est également intéressant de préparer des catalyseurs présentant des concentrations $C_{Mo}$, $C_{NI}$, $C_W$ et $C_P$ au coeur et en périphérie différente. Ces catalyseurs présentent des profils de répartition dits en « cuvette » ou en « dôme ». Un autre type de répartition est celle en croûte où les éléments de la phase active sont répartis en surface.

De façon générale, le rapport coeur/bord des concentrations $C_{Mo}$, $C_{NI}$, $C_W$ et $C_P$ est compris entre 0.1 et 3. Dans une variante de l'invention, il est compris entre 0.8 et 1.2. Dans une autre variante de l'invention, le rapport coeur/bord des concentrations $C_P$ est compris entre 0.3 et 0.8.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolyrianions d'Anderson, par exemple. La teneur massique en phosphore calculée sous la forme $P_2O_5$ est comprise entre 0,5 et 2,5%.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle Si(OEt)$_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux du groupe VIB et du groupe VIII du catalyseur de la présente invention peuvent être présents en totalité ou partiellement sous forme métallique et/ou oxyde et/ou sulfure.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels.

Les sources d'éléments du groupe VIII qui peuvent être utilisées sont bien connues de l'homme du métier. Par exemple, pour les métaux non nobles on utilisera les nitrates, les sulfates, les hydroxydes, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

De préférence, on n'ajoute pas d'halogènes autres que celui introduit à l'imprégnation, cet halogène étant de préférence le chlore.

Dans l'ensemble des méthodes précitées, il peut être éventuellement souhaitable d'ajouter, lors d'une étape quelconque de la préparation, une proportion mineure d'au moins un élément stabilisant choisi dans le groupe formé par la zircone et le titane.

Mise en forme des supports et catalyseurs,

Le support peut être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

La mise en forme peut également être réalisée en présence des différents constituants du catalyseur et extrusion de la pâte minérale obtenue, par pastillage, mise en forme sous forme de billes au drageoir tournant ou au tambour, coagulation en goutte, oil-drop, oil-up, ou tout autre procédé connu d'agglomération d'une poudre contenant de l'alumine et éventuellement d'autres ingrédients choisis parmi ceux mentionnés ci-dessus.

Les éléments constitutifs de la matrice du support peuvent également être introduits partiellement ou en totalité sous forme de poudre.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Par ailleurs, ces supports mis en oeuvre selon la présente invention peuvent avoir été traités ainsi qu'il est bien connu de l'homme de l'art par des additifs pour faciliter la mise en forme et/ou améliorer les propriétés mécaniques finales des supports alumino-silicates. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristiques des supports de l'invention est opéré partiellement lors de cette étape de mise en forme des particules de supports.

La mise en forme peut être réalisée en utilisant les techniques de mise en forme des catalyseurs, connues de l'homme de l'art, telles que par exemple: extrusion, dragéification, séchage par atomisation ou encore pastillage.

On peut ajouter ou retirer de l'eau pour ajuster la viscosité de la pâte à extruder. Cette étape peut être réalisée à tout stade de l'étape de malaxage. Dans le cas de supports alumino-silicates, il peut être avantageux de diminuer la quantité d'eau de la pâte afin d'accroître la puissance mécanique fournie à la pâte. Cette action se traduit généralement par une diminution du volume total pour une teneur en acide optimale.

Pour ajuster la teneur en matière solide de la pâte à extruder afin de la rendre extrudable, on peut également ajouter un composé majoritairement solide et de préférence un oxyde ou un hydrate. On utilisera de manière préférée un hydrate et de manière encore plus préférée un hydrate d'aluminium. La perte au feu de cet hydrate sera supérieure à 15%.

La teneur en acide ajouté au malaxage avant la mise en forme est inférieure à 30%, de préférence comprise entre 0,5 et 20% poids de la masse anhydre en silice et alumine engagée dans la synthèse.

L'extrusion peut être réalisée par n'importe quel outil conventionnel, disponible commercialement. La pâte issue du malaxage est extrudée à travers une filière, par exemple à l'aide d'un piston ou d'une mono-vis ou double vis d'extrusion. Cette étape d'extrusion peut être réalisée par toute méthode connue de l'homme de métier.

Les extrudés de support selon l'invention ont généralement une résistance à l'écrasement d'au moins 70 N/cm et de manière préférée supérieure ou égale à 100 N/cm.

Calcination du support

Le séchage est effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1100°C. Au moins une calcination peut être effectuée après l'une quelconque des étapes de la préparation. Ce traitement par exemple peut être effectué en lit traversé, en lit léché ou en atmosphère statique. Par exemple, le four utilisé peut être un four rotatif tournant ou être un four vertical à couches traversées radiales. Les conditions de calcination: température et durée dépendent principalement de la température maximale d'utilisation du catalyseur. Les conditions préférées de calcination se situant entre plus d'une heure à 200°C à moins d'une heure à 1100°C. La calcination peut être opérée en présence de vapeur d'eau. La calcination finale peut être éventuellement effectuée en présence d'une vapeur acide ou basique. Par exemple, la calcination peut être réalisée sous pression partielle d'ammoniaque.

Traitements post-synthèse

Des traitements post-synthèse peuvent être effectués, de manière à améliorer les propriétés du support, notamment son homogénéité telle que définie précédemment.

Selon un mode de réalisation préféré, le traitement post-synthèse est un traitement hydrothermal. Le traitement hydrothermal est effectué par toute technique connue de l'homme du métier. Par traitement hydrothermal, on entend mise en contact à n'importe quelle étape de l'élaboration du support mixte avec de l'eau en phase vapeur ou en phase liquide. Par traitement hydrothermal, on peut entendre notamment mûrissement, steaming (traitement à la vapeur), autoclavage, calcination sous air humide, réhydratation. Sans que cela réduise la portée de l'invention, un tel traitement a pour effet de rendre mobile le composant silice.

Selon l'invention, le mûrissement peut avoir lieu avant ou après la mise en forme. Selon un mode préféré de l'invention, le traitement hydrothermal se fait par steaming (traitement à la vapeur) dans un four en présence de vapeur d'eau. La température pendant le steaming (traitement à la vapeur) peut être comprise entre 600 et 1100 °C et de préférence supérieure à 700°C pendant une période de temps comprise entre 30 minutes et 3 heures. La teneur en vapeur d'eau est supérieure à 20 g d'eau par kg d'air sec et de préférence supérieure à 40 g d'eau par kg d'air sec et de manière préférée supérieure à 100 g d'eau par kg d'air sec. Un tel traitement peut, le cas échéant, remplacer totalement ou en partie le traitement de calcination.

Le support peut ainsi être avantageusement soumis à un traitement hydrothermal en atmosphère confinée. On entend par traitement hydrothermal en atmosphère confinée un traitement par passage à l'autoclave en présence d'eau sous une température supérieure à la température ambiante.

Au cours de ce traitement hydrothermal, on peut traiter de différentes manières l'alumine-silice mise en forme ou le support (matrice + zéolithe) mis en forme. Ainsi, on peut imprégner le support ou l'alumine silice d'acide, préalablement à son passage à l'autoclave, l'autoclavage étant fait soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion de l'alumine-silice ou du support dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

L'autoclave est de préférence un autoclave à panier rotatif tel que celui défini dans la demande de brevet EP-A- 0 387109.

La température pendant l'autoclavage peut être comprise entre 100 et 250°C pendant une période de temps comprise entre 30 minutes et 3 heures.

*Procédés de traitement de charges hydrocarbonées selon l'invention*

De façon générale, les catalyseurs selon l'invention sont utilisés pour le traitement des coupes hydrocarbonées, généralement en présence d'hydrogène, à une température supérieure à 200°C, sous une pression supérieure à 1 MPa, la vitesse spatiale étant comprise entre 0,1 et 20h$^{-1}$ et la quantité d'hydrogène introduite est telle que le rapport volumique litre d'hydrogène / litre d'hydrocarbure soit compris entre 80 et 5000 l/l.

Les catalyseurs selon l'invention sont utilisés avantageusement pour l'hydrocraquage et/ou l'hydroconversion de coupes hydrocarbonées.

Les catalyseurs selon l'invention peuvent être utilisés pour l'hydrotraitement de charges hydrocarbonées, seuls ou en amont d'un procédé d'hydrocraquage/hydroconversion sur un catalyseur d'hydrocraquage à base de zéolite ou d'alumine-silice, comprenant de préférence du nickel et du tungstène.

Sulfuration des catalyseurs

Préalablement à l'injection de la charge, les catalyseurs utilisés dans le procédé selon la présente invention sont de préférence soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'homme du métier consiste à chauffer en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

Chargés

Des charges très variées peuvent être traitées par les procédés selon l'invention décrits ci-dessus et généralement elles contiennent au moins 20% volume et souvent au moins 80% volume de composés bouillant au-dessus de 340°C.

La charge peut être par exemple des LCO (Light Cycle Oil (gazoles légers issus d'une unité de craquage catalytique)), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées , ou encore la charge peut être une huile désasphaltée, ou encore tout mélange des charges précédemment citées. La liste ci-dessus n'est pas limitative. Les paraffines issues du procédé Fischer-Tropsch sont exclues. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges traitées dans les procédés selon l'invention est usuellement supérieure à 500 ppm, de préférence comprise entre 500 et 10000 ppm poids, de manière plus préférée entre 700 et 4000 ppm poids et de manière encore plus préférée entre 1000 et 4000 ppm. La teneur en soufre des charges traitées dans les procédés selon l'invention est usuellement comprise entre 0,01 et 5% poids, de manière préférée comprise entre 0,2 et 4% et de manière encore plus préférée entre 0.5 et 2 %.

La charge peut éventuellement contenir des métaux. La teneur cumulée en nickel et vanadium des charges traitées dans les procédés selon l'invention est de préférence inférieure à 1 ppm poids.

La teneur en asphaltènes est généralement inférieure à 3000 ppm, de manière préférée inférieure à 1000 ppm, de manière encore plus préférée inférieure à 200 ppm.

Lits de garde :

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement.

Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

Ces catalyseurs peuvent avoir été imprégnées par une phase active ou non. De manière préférée, les catalyseurs sont imprégnés par une phase hydro-déshydrogénante. De manière très préférée, la phase CoMo ou NiMo est utilisée.

Ces catalyseurs peuvent présenter de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

Conditions opératoires

Les conditions opératoires telles que température, pression, taux de recyclage d'hydrogène, vitesse spatiale horaire, pourront être très variables en fonction de la nature de la charge, de la qualité des produits désirés et des installations dont dispose le raffineur. Le catalyseur d'hydrocraquage/hydroconversion ou hydrotraitement est généralement mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20h$^{-1}$ et de préférence 0,1-6h$^{-1}$, de préférence, 0,2-3h$^{-1}$, et la quantité d'hydrogène introduite est telle que le rapport volumique litre d'hydrogène / litre d'hydrocarbure soit compris entre 80 et 5000l/l et le plus souvent entre 100 et 2000 l/l.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15% et de manière encore plus préférée comprises entre 20 et 95%.

Modes de réalisation

Les procédés d'hydrocraquage et/ou hydroconversion mettant en oeuvre les catalyseurs selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le catalyseur de la présente invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.

Le catalyseur de la présente invention peut être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur de la présente invention.

Le lit bouillonnant s'opère avec retrait de catalyseur usé et ajout journalier de catalyseur neuf afin de conserver une activité du catalyseur stable.

Dans un schéma d'hydrocraquage dit en deux étapes avec séparation intermédiaire entre les deux zones réactionnelles, dans une étape donnée, le catalyseur de la présente invention peut-être utilisé dans l'un ou dans les deux réacteurs en association ou non avec un catalyseur d'hydroraffinage situé en amont du catalyseur de la présente invention.

Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Procédé dit en une étape en lit fixe

Pour les catalyseurs à faible teneur en silice, les teneurs pondérales en silice du support entrant dans la composition du catalyseur sont comprises entre 5 et 30% et de préférence entre 5 et 20%.

Pour les catalyseurs à forte teneur en silice, les teneurs pondérales en silice du support entrant dans la composition du catalyseur sont comprises entre 20 et 80% et de préférence entre 30 et 60%.

Dans le cas où le catalyseur selon la présente invention est utilisé en amont d'un catalyseur zéolithique d'hydrocraquage, par exemple à base de zéolithe Y, on utilisera avantageusement un catalyseur présentant une faible teneur pondérale en silice telle que définie précédemment. Il pourra aussi être avantageusement utilisé en association avec un catalyseur d'hydroraffinage, ce dernier étant situé en amont du catalyseur de la présente invention.

Lorsque le catalyseur selon la présente invention est utilisé en amont d'un catalyseur d'hydrocraquage à base d'alumine-silice ou à base de zéolithe, dans le même réacteur dans des lits catalytiques distincts ou dans des réacteurs distincts, la conversion est généralement (ou de préférence) inférieure à 50% poids et de manière préférée inférieure à 40%.

Le catalyseur selon l'invention peut être utilisé en amont ou en aval du catalyseur zéolithique. En aval du catalyseur zéolithique, il permet de craquer les HPA. Par HPA, on entend les hydrocarbures polyaromatiques tels que décrits notamment dans l'ouvrage "Hydrocracking, Science and Technology" de J.Scherzer, Editions M.Dékker Incorporated, 1996.

Procédé dit en une étape en lit bouillonnant

Le catalyseur selon l'invention peut être utilisé seul dans un ou plusieurs réacteurs.

Dans le cadre d'un tel procédé, on pourra utiliser avantageusement plusieurs réacteurs en série, le ou les réacteurs en lit bouillonnant contenant le catalyseur selon l'invention étant précédé d'un ou plusieurs réacteurs contenant au moins un catalyseur d'hydroraffinage en lit fixe ou en lit bouillonnant. Lorsque le catalyseur selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

Procédé dit en une étape en lit fixe avec séparation intermédiaire

Le catalyseur selon la présente invention peut aussi être utilisé dans un procédé d'hydrocraquage dit en une étape comportant une zone d'hydroraffinage, une zone permettant l'élimination partielle de l'ammoniac, par exemple par un flash chaud, et une zone comportant un catalyseur d'hydrocraquage. Ce procédé d'hydrocraquage de charges hydrocarbonées en une étape.pour la production de distillats moyens et éventuellement de bases huiles comporte au moins une première zone réactionnelle incluant un hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniac de l'effluent sortant de la première zone. Cette séparation est avantageusement effectuée au moyen d'un flash chaud intermédiaire. L'hydrocraquage opéré en deuxième zone réactionnelle est réalisé en présence d'ammoniac en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur de la présente invention est utilisé de préférence dans la zone réactionnelle d'hydrocraquage en association ou non avec un catalyseur d'hydroraffinage situé en amont du catalyseur de la présente invention. Le catalyseur selon l'invention peut être utilisé en amont ou en aval du catalyseur zéolithique. En aval du catalyseur zéolithique, il permet notamment de convertir les HPA ou les précurseurs de HPA.

Le catalyseur selon l'invention peut être utilisé soit dans la première zone réactionnelle en prétraitement convertissant, seul ou en association avec un catalyseur d'hydroraffinage classique, situé en amont du catalyseur selon l'invention, dans un ou plusieurs lits catalytiques, dans un ou plusieurs réacteurs.

Procédé d'hydrocraquage dit en une étape avec hydroraffinage préliminaire sur catalyseur d'acidité faible.

Le catalyseur selon l'invention peut être utilisé dans un procédé d'hydrocraquage comprenant:

- une première zone réactionnelle d'hydroraffinage dans laquelle la charge est mise en contact avec au moins un catalyseur d'hydroraffinage présentant dans le test standard d'activité un taux de conversion du cyclohexane inférieur à 10 % massique.
- une deuxième zone réactionnelle d'hydrocraquage dans laquelle une partie au moins de l'effluent issu de l'étape d'hydroraffinage est mise en contact avec au moins un catalyseur d'hydrocraquage zéolithique présentant dans le test standard d'activité un taux de conversion du cyclohexane supérieur à 10 % massique, le catalyseur selon l'invention étant présent dans au moins une des deux zones réactionnelles.

La proportion du volume catalytique de catalyseur d'hydroraffinage représente généralement 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée comme décrite précédemment

L'effluent en sortie de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à bas d'alumine-silice, dans un objectif de production de distillats moyens.

La conversion en produits ayant des points d'ébullition inférieurs à 340°C, ou encore inférieurs à 370°C est d'au moins 50% poids.

Procédé dit en deux étapes

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillat moyen (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids.

La même configuration de lits catalytiques en lit fixe ou en lit bouillonnant peut être utilisée dans la première étape d'un schéma dit en deux étapes, que le catalyseur soit utilisé seul ou en association avec un catalyseur d'hydroraffinage classique. Le catalyseur selon l'invention peut être utilisé en amont ou en aval du catalyseur zéolithique. En aval du catalyseur zéolithique, il permet notamment de convertir les HPA ou les précurseurs de HPA.

Pour les procédés dits en une étape et pour la première étape des procédés d'hydrocraquage en deux étapes, les catalyseurs préférés selon l'invention sont les catalyseurs dopés à base d'éléments du groupe VIII non nobles, de manière encore plus préférée les catalyseurs à base de nickel et de tungstène et l'élément dopant étant le phosphore.

Les catalyseurs utilisés dans la deuxième étape des procédés d'hydrocraquage en deux étapes sont de préférence les catalyseurs dopés à base d'éléments nobles du groupe VIII, de manière encore plus préférée les catalyseurs à base de platine et/ou de palladium et l'élément dopant étant le phosphore.

Les exemples suivants illustrent la présente invention sans toutefois en limiter la portée.

Exemple 1 : Préparation d'un catalyseur C1 (conforme)

Synthèse d'une matrice alumine-silice AS1

La matrice AS1 est obtenue de la manière suivante.

On prépare un hydrate d'alumine selon les enseignements du brevet US 3 124 418. Après filtration, le précipité fraîchement préparé est mélangé avec une solution d'acide silicique préparé par échange sur résine décationisante. Les proportions des deux solutions sont ajustées de manière à atteindre une composition finale de la matrice alumine-silice en produit anhydre de 70% $Al_2O_3$ - 30% $SiO_2$. Ce mélange est rapidement homogénéisé dans un broyeur colloïdal commercial en présence d'acide nitrique de façon que la teneur en acide nitrique de la suspension en sortie de broyeur soit de 8% rapportée au solide mixte silice-alumine. Puis, la suspension est séchée classiquement dans un atomiseur de manière conventionnelle de 300°C à 60°C.

Zéolithe Z1

On utilise une zéolithe Z1 de type USY de rapport Si/Al mesuré par FX de 14.7, de rapport Si/Al de charpente mesuré par RMN de 19, de teneur en sodium de 260 ppm, de paramètre de maille a = 24.29 Å, de taux de cristallinité de 88% et de surface BET égale à 838 m$^2$/g.

Mise en forme du support S1

On mélange ensuite 5 g de zéolithe Z1 et 95 g de la matrice matrice alumine-silice AS1 rapportés en matière solide tels que décrits ci-dessus. Ce mélange se fait avant l'introduction dans l'extrudeuse. La poudre de zéolithe est préalablement mouillée puis ajoutée à la poudre de matrice alumine-silice en présence d'acide nitrique à 66% (5% poids d'acide par gramme de gel sec). Le mélange obtenu est malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air, puis calcinés à 700°C en présence de vapeur d'eau.

On obtient ainsi le support S1 contenant rapporté en masse anhydre 5% de zéolithe Z1. La composition massique du support S1 en produit anhydre est de 66,5% $Al_2O_3$ et de 33,5 % $SiO_2$.

Préparation du catalyseur d'hydrocraquage conforme à l'invention C1

Le catalyseur C1 est obtenu par imprégnation à sec du support S1 sous forme d'extrudés par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. Les teneurs massiques en $WO_3$, $NiO$, $P_2O_5$ du catalyseur C1 sont respectivement de 24,7%, 3,6% et 2%.

Les caractéristiques du catalyseur C1 sont les suivantes :

La surface BET est de 245 m$^2$/g.
Le volume poreux total, mesuré par adsorption d'azote, est de 0,37 ml/g.
Le volume poreux total, mesuré porosimétrie mercure, est de 0,34 ml/g.
Le diamètre poreux moyen, mesuré par porosimétrie au mercure, est de 75 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ + 30 Å est de 0,045ml/g.
Le volume V6, mesuré par porosimétrie au mercure, compris dans les pores de diamètres supérieurs à $D_{moyen}$ + 15 Å est de 0,05 ml/g,
Le volume poreux, mesuré par porosimétrie au mercure, compris dans les pores de diamètre supérieurs à 140 Å est de 0,040 ml/g,
Le volume poreux, mesuré par porosimétrie au mercure, compris dans les pores de diamètre supérieurs à 160 Å est de 0,0385 ml/g,
Le volume poreux, mesuré par porosimétrie au mercure, compris dans les pores de diamètre supérieurs à 200 Å est 0,038ml/g,
Le volume poreux, mesuré par porosimétrie au mercure, est compris dans les pores de diamètre supérieurs à 500 Å est de 0,032 ml/g,

Le diagramme de diffraction X contient :

-   les raies principales caractéristiques de l'alumine gamma et notamment il contient les pics à un d compris entre 1,39 à 1,40 Å et à un d compris entre 1,97 Å à 2,00 Å,
-   les raies principales caractéristiques de la zéolithe Z1 de type USY.

La teneur en sodium atomique est de 190 +/- 20 ppm. La teneur en soufre atomique est de 800 ppm.

Exemple 2 : Préparation d'un catalyseur C2 (conforme)

La matrice alumine-silice utilisée pour la préparation du catalyseur C2 est la matrice alumine-silice AS1 définie dans l'exemple 1.

Zéolithe Z2

On utilise une zéolithe Z2 de type USY telle que décrite dans la demande de brevet US 5601798. On prépare cette zéolithe selon la méthode décrite dans l'exemple 52 tableau 16. Le volume mésoporeux obtenu est 0,36 cm$^3$/g. Le paramètre de maille a est 24.34 Å et le taux de cristallinité de 75%.

Mise en forme du support S2

On mélange ensuite 5 g de zéolithe Z2 et 95 g de la matrice matrice alumine-silice AS1 rapportés en matière solide tels que décrits ci-dessus. La mise en forme du support S2 est identique à celle du support S1 de l'exemple 1.

On obtient ainsi le support S2 contenant rapporté en masse anhydre 5% de zéolithe Z2. La composition massique du support S2 en produit anhydre est de 66,7% $Al_2O_3$ et de 33,3 % $SiO_2$.

Préparation du catalyseur d'hydrocraquage conforme à l'invention C2

Le catalyseur C2 est obtenu par imprégnation à sec du support S2. La méthode de préparation du catalyseur C2 est identique à celle du catalyseur C1 de l'exemple 1. Les teneurs massiques en $WO_3$, NiO, $P_2O_5$ du catalyseur C2 sont respectivement de 24,9%, 3,8% et 2%.

Les caractéristiques du catalyseur C2 sont les suivantes :

La surface BET est de 250 m$^2$/g.
Le volume poreux total, mesuré par adsorption d'azote, est de 0,36 ml/g.
Le volume poreux total, mesuré porosimétrie mercure, est de 0,33 ml/g.
Le diamètre poreux moyen, mesuré par porosimétrie au mercure, est de 75 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ + 30 Å est de 0,045ml/g.
Le volume V6, mesuré par porosimétrie au mercure, compris dans les pores de diamètres supérieurs à $D_{moyen}$ + 15 Å est de 0,05 ml/g,
Le volume poreux, mesuré par porosimétrie au mercure, compris dans les pores de diamètre supérieurs à 140 Å est de 0,040 ml/g,
Le volume poreux, mesuré par porosimétrie au mercure, compris dans les pores de diamètre supérieurs à 160 Å est de 0,0375 ml/g,
Le volume poreux, mesuré par porosimétrie au mercure, compris dans les pores de diamètre supérieurs à 200 Å est 0,037ml/g,
Le volume poreux, mesuré par porosimétrie au mercure, est compris dans les pores de diamètre supérieurs à 500 Å est de 0,030 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z2 de type USY.

La teneur en sodium atomique est de 190 +/- 20 ppm. La teneur en soufre atomique est de 800 ppm.

Exemple 3 : Préparation d'un catalyseur C3 (conforme)

La matrice alumine-silice utilisée pour la préparation du catalyseur C3 est la matrice alumine-silice AS1 définie dans l'exemple 1.

Zéolithe Z3

On utilise une zéolithe Z3 de type USY de rapport Si/Al mesuré par FX de 73, de teneur en sodium de 102 ppm, de paramètre de maille a = 24.15 Å , de taux de cristallinité de 44% et de surface BET égale à 783 m$^2$/g.

Mise en forme du support S3

On mélange ensuite 25 g de zéolithe Z3 et 75 g de la matrice matrice alumine-silice AS1 rapportés en matière solide tels que décrits ci-dessus. La mise en forme du support S3 est identique à celle du support S1 de l'exemple 1.

On obtient ainsi le support S3 contenant rapporté en masse anhydre 25% de zéolithe Z3. La composition massique du support S3 en produit anhydre est de 52,6% $Al_2O_3$ et de 47,4 % $SiO_2$.

Préparation du catalyseur d'hydrocraquage conforme à l'invention C3

Le catalyseur C3 est obtenu par imprégnation à sec du support S3. La méthode de préparation du catalyseur C3 est identique à celle du catalyseur C1 de l'exemple 1. Les teneurs massiques en $WO_3$, NiO, $P_2O_5$ du catalyseur C3 sont respectivement de 26,0%, 4,0% et 2%.

Les caractéristiques du catalyseur C3 sont les suivantes :

La surface BET est de 365 $m^2$/g.

Le volume poreux total, mesuré par adsorption d'azote, est de 0,38 ml/g.

Le volume poreux total, mesuré porosimétrie mercure, est de 0,32 ml/g.

Le diamètre poreux moyen, mesuré par porosimétrie au mercure, est de 77 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.

Le volume V3, mesuré par porosimétrie au mercure, compris dans les pores de diamètres supérieurs à $D_{moyen}$ + 30 Å est de 0,045ml/g.

Le volume V6, mesuré par porosimétrie au mercure, compris dans les pores de diamètres supérieurs à $D_{moyen}$ + 15 Å est de 0,05 ml/g,

Le volume poreux, mesuré par porosimétrie au mercure, compris dans les pores de diamètre supérieurs à 140 Å est de 0,040 ml/g,

Le volume poreux, mesuré par porosimétrie au mercure, compris dans les pores de diamètre supérieurs à 160 Å est de 0,038 ml/g,

Le volume poreux, mesuré par porosimétrie au mercure, compris dans les pores de diamètre supérieurs à 200 Å est 0,037ml/g,

Le volume poreux, mesuré par porosimétrie au mercure, est compris dans les pores de diamètre supérieurs à 500 Å est de 0,031 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z3 de type USY.

La teneur en sodium atomique est de 190 +/- 20 ppm. La teneur en soufre atomique est de 800 ppm.

Exemple 4 : Préparation d'un catalyseur C4 (non conforme)

La matrice alumine-silice utilisée pour la préparation du catalyseur C4 est la matrice alumine-silice AS1 définie dans l'exemple 1.

Zéolithe Z4

On utilise une zéolithe Z4 de type Y de rapport Si/Al mesuré par FX de 2.6, de teneur en sodium de 1400 ppm, de paramètre de maille a = 24.53 Å et de surface BET égale à 750 $m^2$/g.

Mise en forme du support S4

On mélange ensuite 5 g de zéolithe Z4 et 95 g de la matrice matrice alumine-silice AS1 rapportés en matière solide tels que décrits ci-dessus. La mise en forme du support S4 est identique à celle du support S1 de l'exemple 1.

On obtient ainsi le support S4 contenant rapporté en masse anhydre 5% de zéolithe Z4. La composition massique du support S4 en produit anhydre est de 66,5% $Al_2O_3$ et de 33,5 % $SiO_2$.

Préparation du catalyseur d'hydrocraquage non conforme à l'invention C4

Le catalyseur C4 est obtenu par imprégnation à sec du support S4. La méthode de préparation du catalyseur C4 est identique à celle du catalyseur C1 de l'exemple 1.Les teneurs massiques en $WO_3$, $NiO$, $P_2O_5$ du catalyseur C4 sont respectivement de 25,9%, 3,9% et 2%.

Les caractéristiques du catalyseur C4 sont les suivantes :

La surface BET est de 210 $m^2/g$.

Le volume poreux total, mesuré par adsorption d'azote, est de 0,33 ml/g.

Le volume poreux total, mesuré porosimétrie mercure, est de 0,32 ml/g.

Le diamètre poreux moyen, mesuré par porosimétrie au mercure, est de 75 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.

Le volume V3, mesuré par porosimétrie au mercure, compris dans les pores de diamètres supérieurs à $D_{moyen}$ + 30 Å est de 0,045ml/g.

Le volume V6, mesuré par porosimétrie au mercure, compris dans les pores de diamètres supérieurs à $D_{moyen}$ + 15 Å est de 0,05 ml/g,

Le volume poreux, mesuré par porosimétrie au mercure, compris dans les pores de diamètre supérieurs à 140 Å est de 0,040 ml/g,

Le volume poreux, mesuré par porosimétrie au mercure, compris dans les pores de diamètre supérieurs à 160 Å est de 0,038 ml/g,

Le volume poreux, mesuré par porosimétrie au mercure, compris dans les pores de diamètre supérieurs à 200 Å est 0,036 ml/g,

Le volume poreux, mesuré par porosimétrie au mercure, est compris dans les pores de diamètre supérieurs à 500 Å est de 0,030 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z4 de type Y.

La teneur en sodium atomique est de 265 +/- 20 ppm. La teneur en soufre atomique est de 800 ppm.

Exemple 5 : Préparation d'un catalyseur C5 (conforme)

Synthèse d'une matrice alumine-silice AS2

La matrice AS2 est obtenue de la manière suivante.

La poudre d'hydroxyde d'aluminium a été préparée selon le procédé décrit dans le brevet WO 00/01617. La taille des particules moyenne des particules d'hydroxyde d'aluminium mesurée par granulométrie laser est de 40 microns. Cette poudre est mélangée à un sol de silice préparé par échange sur résine décationisante, puis filtré sur résine de porosité 2. Les concentrations en sol de silice et en poudre d'hydroxyde d'aluminium sont ajustées de manière à obtenir une composition finale de la matrice alumine-silice en produit anhydre 60% $Al_2O_3$ et de 40% $SiO_2$. Cette suspension est ensuite filtré afin de diminuer la quantité d'eau du gâteau mixte.

Zéolithe Z1

On utilise la zéolithe Z1 définie dans l'exemple 1.

Mise en forme du support S5

On mélange ensuite 5 g de zéolithe Z1 et 95 g de la matrice matrice alumine-silice AS2 rapportés en matière solide tels que décrits ci-dessus. La mise en forme du support S5 est identique à celle du support S1 de l'exemple 1.

On obtient ainsi le support S5 contenant rapporté en masse anhydre 5% de zéolithe Z1. La composition massique du support S5 en produit anhydre est de 57 % $Al_2O_3$ et de 43 % $SiO_2$.

Préparation du catalyseur d'hydrocraquage conforme à l'invention C5

Le catalyseur C5 est obtenu par imprégnation à sec du support S5. La méthode de préparation du catalyseur C5 est identique à celle du catalyseur C1 de l'exemple 1. Les teneurs massiques en $WO_3$, $NiO$, $P_2O_5$ du catalyseur C5 sont respectivement de 24,7%, 3,6% et 2%.

Les caractéristiques du catalyseur C5 sont les suivantes :

La surface BET est de 235 $m^2$/g.

Le volume poreux total, mesuré par adsorption d'azote, est de 0,36 ml/g.

Le volume poreux total, mesuré porosimétrie mercure, est de 0,34 ml/g.

Le diamètre poreux moyen, mesuré par porosimétrie au mercure, est de 72 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,9.

Le volume V3, mesuré par porosimétrie au mercure, compris dans les pores de diamètre supérieur à $D_{moyen}$ + 30 Å est de 0,072 ml/g.

Le volume V6, mesuré par porosimétrie au mercure, compris dans les pores de diamètre supérieur à $D_{moyen}$ + 15 Å est de 0,087 ml/g,

Le volume poreux, mesuré par porosimétrie au mercure, compris dans les pores de diamètre supérieur à 140 Å est de 0,055 ml/g,

Le volume poreux, mesuré par porosimétrie au mercure, compris dans les pores de diamètre supérieur à 160 Å est de 0,053 ml/g,

Le volume poreux, mesuré par porosimétrie au mercure, compris dans les pores de diamètre supérieur à 200 Å est de 0,051 ml/g,

Le volume poreux, mesuré par porosimétrie au mercure, est compris dans les pores de diamètre supérieur à 500 Å est de 0,045 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z1 de type USY.

La teneur en sodium atomique est de 190 +/- 20 ppm. La teneur en soufre atomique est de 800 ppm.

Exemple 6 : Préparation d'un catalyseur C6 (conforme)

La matrice alumine-silice utilisée pour la préparation du catalyseur C6 est la matrice alumine-silice AS2 définie dans l'exemple 5.

Zéolithe Z2

On utilise la zéolithe Z2 définie dans l'exemple 2.

Mise en forme du support S6

On mélange ensuite 5 g de zéolithe Z2 et 95 g de la matrice matrice alumine-silice AS2 rapportés en matière solide tels que décrits ci-dessus. La mise en forme du support S6 est identique à celle du support S1 de l'exemple 1.

On obtient ainsi le support S6 contenant rapporté en masse anhydre 5% de zéolithe Z2. La composition massique du support S6 en produit anhydre est de 57 % $Al_2O_3$ et de 43 % $SiO_2$.

Préparation du catalyseur d'hydrocraquage conforme à l'invention C6

Le catalyseur C6 est obtenu par imprégnation à sec du support S6. La méthode de préparation du catalyseur C6 est identique à celle du catalyseur C1 de l'exemple 1. Les teneurs massiques en $WO_3$, $NiO$, $P_2O_5$ du catalyseur C6 sont respectivement de 24,6%, 3,6% et 2%.

Les caractéristiques du catalyseur C6 sont les suivantes :

La surface BET est de 210 $m^2$/g.

Le volume poreux total, mesuré par adsorption d'azote, est de 0,35 ml/g.

Le volume poreux total, mesuré porosimétrie mercure, est de 0,33 ml/g.

Le diamètre poreux moyen, mesuré par porosimétrie au mercure, est de 70 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,9.

Le volume V3, mesuré par porosimétrie au mercure, compris dans les pores de diamètre supérieur à $D_{moyen}$ + 30 Å est de 0,072 ml/g.

Le volume V6, mesuré par porosimétrie au mercure, compris dans les pores de diamètre supérieur à $D_{moyen}$ + 15 Å est de 0,087 ml/g,

Le volume poreux, mesuré par porosimétrie au mercure, compris dans les pores de diamètre supérieur à 140 Å est de 0,055 ml/g,

Le volume poreux, mesuré par porosimétrie au mercure, compris dans les pores de diamètre supérieur à 160 Å est de 0,053 ml/g,

Le volume poreux, mesuré par porosimétrie au mercure, compris dans les pores de diamètre supérieur à 200 Å est de 0,051 ml/g,

Le volume poreux, mesuré par porosimétrie au mercure, est compris dans les pores de diamètre supérieur à 500 Å est de 0,044 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z2 de type USY.

La teneur en sodium atomique est de 190 +/- 20 ppm. La teneur en soufre atomique est de 800 ppm.

Exemple 7 : Préparation d'un catalyseur C7 (conforme)

La matrice alumine-silice utilisée pour la préparation du catalyseur C7 est la matrice alumine-silice AS2 définie dans l'exemple 5.

Zéolithe Z3

On utilise la zéolithe Z3 définie dans l'exemple 3.

Mise en forme du support S7

On mélange ensuite 25 g de zéolithe Z3 et 75 g de la matrice matrice alumine-silice AS2 rapportés en matière solide tels que décrits ci-dessus. La mise en forme du support S7 est identique à celle du support S1 de l'exemple 1.

On obtient ainsi le support S7 contenant rapporté en masse anhydre 25% de zéolithe Z3. La composition massique du support S7 en produit anhydre est de 45 % $Al_2O_3$ et de 55 % $SiO_2$.

Préparation du catalyseur d'hydrocraquage conforme à l'invention C7

Le catalyseur C7 est obtenu par imprégnation à sec du support S7. La méthode de préparation du catalyseur C7 est identique à celle du catalyseur C1 de l'exemple 1. Les teneurs massiques en $WO_3$, $NiO$, $P_2O_5$ du catalyseur C7 sont respectivement de 24,5%, 3,5% et 2%.

Les caractéristiques du catalyseur C7 sont les suivantes :

La surface BET est de 360 $m^2$/g.

Le volume poreux total, mesuré par adsorption d'azote, est de 0,38 ml/g.

Le volume poreux total, mesuré porosimétrie mercure, est de 0,35 ml/g.

Le diamètre poreux moyen, mesuré par porosimétrie au mercure, est de 75 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,9.

Le volume V3, mesuré par porosimétrie au mercure, compris dans les pores de diamètre supérieur à $D_{moyen}$ + 30 Å est de 0,072 ml/g.

Le volume V6, mesuré par porosimétrie au mercure, compris dans les pores de diamètre supérieur à $D_{moyen}$ + 15 Å est de 0,087 ml/g,

Le volume poreux, mesuré par porosimétrie au mercure, compris dans les pores de diamètre supérieur à 140 Å est de 0,055 ml/g,

Le volume poreux, mesuré par porosimétrie au mercure, compris dans les pores de diamètre supérieur à 160 Å est de 0,052 ml/g,

Le volume poreux, mesuré par porosimétrie au mercure, compris dans les pores de diamètre supérieur à 200 Å est de 0,050 ml/g,

Le volume poreux, mesuré par porosimétrie au mercure, est compris dans les pores de diamètre supérieur à 500 Å est de 0,042 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z3 de type USY.

La teneur en sodium atomique est de 180 +/- 20 ppm. La teneur en soufre atomique est de 800 ppm.

Exemple 8 : Préparation d'un catalyseur C8 (non conforme)

La matrice alumine-silice utilisée pour la préparation du catalyseur C8 est la matrice alumine-silice AS2 définie dans l'exemple 5.

Zéolithe Z4

On utilise la zéolithe Z4 définie dans l'exemple 4.

Mise en forme du support S8

On mélange ensuite 5 g de zéolithe Z4 et 95 g de la matrice matrice alumine-silice AS2 rapportés en matière solide tels que décrits ci-dessus. La mise en forme du support S8 est identique à celle du support S1 de l'exemple 1.
On obtient ainsi le support S8 contenant rapporté en masse anhydre 5% de zéolithe Z4. La composition massique du support S8 en produit anhydre est de 57 % $Al_2O_3$ et de 43 % $SiO_2$..

Préparation du catalyseur d'hydrocraquage non conforme à l'invention C8

Le catalyseur C8 est obtenu par imprégnation à sec du support S8. La méthode de préparation du catalyseur C8 est identique à celle du catalyseur C1 de l'exemple 1. Les teneurs massiques en $WO_3$, NiO, $P_2O_5$ du catalyseur C8 sont respectivement de 24,5%, 3,5% et 2%.
Les caractéristiques du catalyseur C8 sont les suivantes :

La surface BET est de 210 $m^2$/g.

Le volume poreux total, mesuré par adsorption d'azote, est de 0,38 ml/g.

Le volume poreux total, mesuré porosimétrie mercure, est de 0,35 ml/g.

Le diamètre poreux moyen, mesuré par porosimétrie au mercure, est de 76 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,9.

Le volume V3, mesuré par porosimétrie au mercure, compris dans les pores de diamètre supérieur à $D_{moyen}$ + 30 Å est de 0,072 ml/g.

Le volume V6, mesuré par porosimétrie au mercure, compris dans les pores de diamètre supérieur à $D_{moyen}$ + 15 Å est de 0,087 ml/g,

Le volume poreux, mesuré par porosimétrie au mercure, compris dans les pores de diamètre supérieur à 140 Å est de 0,055 ml/g,

Le volume poreux, mesuré par porosimétrie au mercure, compris dans les pores de diamètre supérieur à 160 Å est de 0,052 ml/g,

Le volume poreux, mesuré par porosimétrie au mercure, compris dans les pores de diamètre supérieur à 200 Å est de 0,050 ml/g,

Le volume poreux, mesuré par porosimétrie au mercure, est compris dans les pores de diamètre supérieur à 500 Å est de 0,045 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z4 de type USY.

La teneur en sodium atomique est de 260 +/- 20 ppm. La teneur en soufre atomique est de 800 ppm.

Exemple 9 : Préparation d'un catalyseur C9 (non conforme)

Synthèse d'une matrice alumine-silice AS3

La matrice AS3 est obtenue de la manière suivante.
Les gels d'alumine-silice sont préparés en mélangeant du silicate de soude et de l'eau, en envoyant ce mélange sur une résine échangeuse d'ion. On ajoute une solution d'hexahydrate de chlorure d'aluminium dans l'eau au sol de silice décationisé. Afin d'obtenir un gel, on ajoute de l'ammoniaque, on filtre ensuite le précipité et on effectue un lavage avec une solution d'eau et d'ammoniaque concentrée jusqu'à que la conductivité de l'eau de lavage soit constante. Le gel issu de cette étape est mélangé avec de la poudre de boehmite Pural de façon à ce que la composition finale de la matrice alumine-silice en produit anhydre soit, à ce stade de la synthèse, égale à 70% $Al_2O_3$-30% $SiO_2$. Cette suspension est passée dans un broyeur colloïdal en présence d'acide nitrique. La teneur en acide nitrique rajouté est ajustée de manière que le pourcentage en sortie de broyeur d'acide nitrique soit de 8% rapporté à la masse d'oxyde mixte solide. Ce mélange est ensuite filtré afin de diminuer la quantité d'eau du gâteau mixte.

Zéolithe Z1

On utilise la zéolithe Z1 définie dans l'exemple 1.

Mise en forme du support S9

On mélange ensuite 5 g de zéolithe Z1 et 95 g de la matrice matrice alumine-silice AS3 rapportés en matière solide tels que décrits ci-dessus. La mise en forme du support S9 est identique à celle du support S1 de l'exemple 1.
On obtient ainsi le support S9 contenant rapporté en masse anhydre 5% de zéolithe Z1. La composition massique du support S9 en produit anhydre est de 66,5% $Al_2O_3$ et de 33,5 % $SiO_2$.

Préparation du catalyseur d'hydrocraquage non conforme à l'invention C9

Le catalyseur C9 est obtenu par imprégnation à sec du support S9. La méthode de préparation du catalyseur C9 est identique à celle du catalyseur C1 de l'exemple 1. Les teneurs massiques en $WO_3$, NiO, $P_2O_5$ du catalyseur C9 sont respectivement de 24,7%, 3,6% et 2%.
Les caractéristiques du catalyseur C9 sont les suivantes :

La surface BET est de 205 $m^2$/g.
Le volume poreux total, mesuré par adsorption d'azote, est de 0,33 ml/g
Le volume poreux total, mesuré porosimétrie mercure, est de 0,32 ml/g.
Le diamètre poreux moyen, mesuré par porosimétrie au mercure, est de 69 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,95.
Le volume V3, mesuré par porosimétrie au mercure, compris dans les pores de diamètres supérieurs à $D_{moyen}$ + 30 Å est de 0,018 ml/g.
Le volume V6, mesuré par porosimétrie au mercure, compris dans les pores de diamètres supérieurs à $D_{moyen}$ + 15 Å est de 0,021 ml/g,
Le volume poreux, mesuré par porosimétrie au mercure, compris dans les pores de diamètre supérieurs à 140 Å est de 0,012 ml/g,
Le volume poreux, mesuré par porosimétrie au mercure, compris dans les pores de diamètre supérieurs à 160 Å est de 0,010 ml/g,
Le volume poreux, mesuré par porosimétrie au mercure, compris dans les pores de diamètre supérieurs à 200 Å est de 0,006 ml/g,
Le volume poreux, mesuré par porosimétrie au mercure, est compris dans les pores de diamètre supérieurs à 500 Å est de 0,002 ml/g,

Le diagramme de diffraction X contient :

- les raies principales caractéristiques de l'alumine gamma et notamment il contient les pics à un d compris entre 1,39 à 1,40 Å et à un d compris entre 1,97 à 2,00 Å ,
- les raies principales caractéristiques de la zéolithe Z1 de type USY.

La teneur en sodium atomique est de 190 +/- 20 ppm. La teneur en soufre atomique est de 800 ppm.

Exemple 10 : Préparation d'un catalyseur C10 (non conforme)

Synthèse d'une matrice alumine-silice AS4

La matrice AS4 est une poudre de alumine-silice qui a une composition chimique en poids en produits anhydre de 60% $Al_2O_3$ et de 40% $SiO_2$. Sa teneur en sodium est de l'ordre de 100-120 ppm en poids. Sa surface spécifique est de 520 m$^2$/g. Son volume poreux total, mesuré par porosimétrie au mercure est 0.83 cm$^3$/g. La distribution poreuse est bimodale. Dans le domaine des mésopores, un large pic entre 4 et 15 nm avec un maximum à 7 nm est observé. Pour le support, les macropores, dont le diamètre est plus grand que 50 nm , représentent environ 40% du volume poreux total.

Zéolithe Z1

On utilise la zéolithe Z1 définie dans l'exemple 1.

Mise en forme du support S10

On mélange ensuite 5 g de zéolithe Z1 et 95 g de la matrice matrice alumine-silice AS4 rapportés en matière solide tels que décrits ci-dessus. La mise en forme du support S10 est identique à celle du support S1 de l'exemple 1.
On obtient ainsi le support S10 contenant rapporté en masse anhydre 5% de zéolithe Z1. La composition massique du support S10 en produit anhydre est de 57 % $Al_2O_3$ et de 43 % $SiO_2$.

Préparation du catalyseur d'hydrocraquage conforme à l'invention C10

Le catalyseur C10 est obtenu par imprégnation à sec du support S10. La méthode de préparation du catalyseur C10 est identique à celle du catalyseur C1 de l'exemple 1. Les teneurs massiques en $WO_3$, NiO, $P_2O_5$ du catalyseur C10 sont respectivement de 24,7%, 3,6% et 2%.
Les caractéristiques du catalyseur C10 sont les suivantes :

La surface BET est de 255 m$^2$/g.
Le volume poreux total, mesuré par adsorption d'azote, est de 0,85 ml/g.
Le volume poreux total, mesuré porosimétrie mercure, est de 0,83 ml/g.
Le diamètre poreux moyen, mesuré par porosimétrie au mercure, est de 85 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,4.
Le volume V3, mesuré par porosimétrie au mercure, compris dans les pores de diamètre supérieur à $D_{moyen}$ + 30 Å est de 0,41 ml/g.
Le volume V6, mesuré par porosimétrie au mercure, compris dans les pores de diamètre supérieur à $D_{moyen}$ + 15 Å est de 0,43 ml/g,
Le volume poreux, mesuré par porosimétrie au mercure, compris dans les pores de diamètre supérieur à 140 Å est de 0,37 ml/g,
Le volume poreux, mesuré par porosimétrie au mercure, compris dans les pores de diamètre supérieur à 160 Å est de 0,35 ml/g,
Le volume poreux, mesuré par porosimétrie au mercure, compris dans les pores de diamètre supérieur à 200 Å est de 0,34 ml/g,
Le volume poreux, mesuré par porosimétrie au mercure, est compris dans les pores de diamètre supérieur à 500 Å est de 0,33 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z1 de type USY.

La teneur en sodium atomique est de 110 +/- 20 ppm. La teneur en soufre atomique est de 800 ppm.

Exemple 11 : Préparation d'un catalyseur C11 (conforme)

La matrice alumine-silice utilisée pour la préparation du catalyseur C11 est la matrice alumine-silice AS1 définie dans l'exemple 1.

Zéolithe Z1

On utilise la zéolithe Z1 définie dans l'exemple 1.

Mise en forme du support S11

On mélange ensuite 5 g de zéolithe Z1 et 95 g de la matrice matrice alumine-silice AS1 rapportés en matière solide tels que décrits ci-dessus. La mise en forme du support S11 est identique à celle du support S1 de l'exemple 1.
On obtient ainsi le support S11 contenant rapporté en masse anhydre 5% de zéolithe Z1. La composition massique du support S11 en produit anhydre est de 66,5% $Al_2O_3$ et de 33,5 % $SiO_2$.

Préparation du catalyseur d'hydrocraquage conforme à l'invention C11

Le catalyseur C11 est obtenu par imprégnation à sec du support S11. La méthode de préparation du catalyseur C11 est identique à celle du catalyseur C1 de l'exemple 1. Les teneurs massiques en $WO_3$, NiO, $P_2O_5$ du catalyseur C11 sont respectivement de 24,7%, 3,6% et 0,5%.
Les caractéristiques du catalyseur C11 sont les suivantes :

La surface BET est de 252 $m^2$/g.
Le volume poreux total, mesuré par adsorption d'azote, est de 0,38 ml/g.
Le volume poreux total, mesuré porosimétrie mercure, est de 0,35 ml/g.
Le diamètre poreux moyen, mesuré par porosimétrie au mercure, est de 75 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ + 30 Å est de 0,045ml/g.
Le volume V6, mesuré par porosimétrie au mercure, compris dans les pores de diamètres supérieurs à $D_{moyen}$ + 15 Å est de 0,05 ml/g,
Le volume poreux, mesuré par porosimétrie au mercure, compris dans les pores de diamètre supérieurs à 140 Å est de 0,040 ml/g,
Le volume poreux, mesuré par porosimétrie au mercure, compris dans les pores de diamètre supérieurs à 160 Å est de 0,0385 ml/g,
Le volume poreux, mesuré par porosimétrie au mercure, compris dans les pores de diamètre supérieurs à 200 Å est 0,038ml/g,
Le volume poreux, mesuré par porosimétrie au mercure, est compris dans les pores de diamètre supérieurs à 500 Å est de 0,032 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z1 de type USY.

La teneur en sodium atomique est de 190 +/- 20 ppm. La teneur en soufre atomique est de 800 ppm.

Exemple 12 : Préparation d'un catalyseur C12 (conforme)

La matrice alumine-silice utilisée pour la préparation du catalyseur C12 est la matrice alumine-silice AS1 définie dans l'exemple 1.

Zéolithe Z1

On utilise la zéolithe Z1 définie dans l'exemple 1.

Mise en forme du support S12

On mélange ensuite 5 g de zéolithe Z1 et 95 g de la matrice matrice alumine-silice AS1 rapportés en matière solide tels que décrits ci-dessus. La mise en forme du support S12 est identique à celle du support S1 de l'exemple 1.
On obtient ainsi le support S12 contenant rapporté en masse anhydre 5% de zéolithe Z1. La composition massique du support S12 en produit anhydre est de 66,5% $Al_2O_3$ et de 33,5 % $SiO_2$.

Préparation du catalyseur d'hydrocraquage conforme à l'invention C12

Le catalyseur C12 est obtenu par imprégnation à sec du support S12 . La méthode de préparation du catalyseur C12 est identique à celle du catalyseur C1 de l'exemple 1. Les teneurs massiques en $WO_3$, NiO, $P_2O_5$ du catalyseur C12 sont respectivement de 24,7%, 3,6% et 5%.
Les caractéristiques du catalyseur C12 sont les suivantes :

La surface BET est de 240 $m^2$/g.
Le volume poreux total, mesuré par adsorption d'azote, est de 0,37 ml/g.
Le volume poreux total, mesuré porosimétrie mercure, est de 0,35 ml/g.
Le diamètre poreux moyen, mesuré par porosimétrie au mercure, est de 74 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ + 30 Å est de 0,045ml/g.
Le volume V6, mesuré par porosimétrie au mercure, compris dans les pores de diamètres supérieurs à $D_{moyen}$ + 15 Å est de 0,05 ml/g,
Le volume poreux, mesuré par porosimétrie au mercure, compris dans les pores de diamètre supérieurs à 140 Å est de 0,040 ml/g,
Le volume poreux, mesuré par porosimétrie au mercure, compris dans les pores de diamètre supérieurs à 160 Å est de 0,0385 ml/g,
Le volume poreux, mesuré par porosimétrie au mercure, compris dans les pores de diamètre supérieurs à 200 Å est 0,038ml/g,
Le volume poreux, mesuré par porosimétrie au mercure, est compris dans les pores de diamètre supérieurs à 500 Å est de 0,031 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z1 de type USY.

La teneur en sodium atomique est de 190 +/- 20 ppm. La teneur en soufre atomique est de 800 ppm.

Exemple 13 : Préparation d'un catalyseur C13 (non conforme)

La matrice alumine-silice utilisée pour la préparation du catalyseur C13 est la matrice alumine-silice AS1 définie dans l'exemple 1.

Zéolithe Z1

On utilise la zéolithe Z1 définie dans l'exemple 1.

Mise en forme du support S13

On mélange ensuite 5 g de zéolithe Z1 et 95 g de la matrice matrice alumine-silice AS1 rapportés en matière solide tels que décrits ci-dessus. La mise en forme du support S13 est identique à celle du support S1 de l'exemple 1.

On obtient ainsi le support S13 contenant rapporté en masse anhydre 5% de zéolithe Z1. La composition massique du support S13 en produit anhydre est de 66,5% $Al_2O_3$ et de 33,5 % $SiO_2$.

Préparation du catalyseur d'hydrocraquage conforme à l'invention C13

Le catalyseur C13 est obtenu par imprégnation à sec du support S13. La méthode de préparation du catalyseur C13 est identique à celle du catalyseur C1 de l'exemple 1. Les teneurs massiques en $WO_3$, NiO du catalyseur C13 sont respectivement de 24,7%, 3,6%. La teneur massique en $P_2O_5$ sur le catalyseur C13 est de 0%.

Les caractéristiques du catalyseur C13 sont les suivantes :

La surface BET est de 248 $m^2$/g.

Le volume poreux total, mesuré par adsorption d'azote, est de 0,37 ml/g.

Le volume poreux total, mesuré porosimétrie mercure, est de 0,35 ml/g.

Le diamètre poreux moyen, mesuré par porosimétrie au mercure, est de 74 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.

Le volume V3, mesuré par porosimétrie au mercure, compris dans les pores de diamètres supérieurs à $D_{moyen}$ + 30 Å est de 0,045ml/g.

Le volume V6, mesuré par porosimétrie au mercure, compris dans les pores de diamètres supérieurs à $D_{moyen}$ + 15 Å est de 0,05 ml/g,

Le volume poreux, mesuré par porosimétrie au mercure, compris dans les pores de diamètre supérieurs à 140 Å est de 0,040 ml/g,

Le volume poreux, mesuré par porosimétrie au mercure, compris dans les pores de diamètre supérieurs à 160 Å est de 0,0385 ml/g,

Le volume poreux, mesuré par porosimétrie au mercure, compris dans les pores de diamètre supérieurs à 200 Å est 0,038ml/g,

Le volume poreux, mesuré par porosimétrie au mercure, est compris dans les pores de diamètre supérieurs à 500 Å est de 0,031 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z1 de type USY.

La teneur en sodium atomique est de 190 +/- 20 ppm. La teneur en soufre atomique est de 800 ppm.

Exemple 14: Préparation d'un catalyseur C14 (non conforme)

La matrice alumine-silice utilisée pour la préparation du catalyseur C14 est la matrice alumine-silice AS1 définie dans l'exemple 1.

Zéolithe Z1

On utilise la zéolithe Z1 définie dans l'exemple 1.

Mise en forme du support S14

On mélange ensuite 5 g de zéolithe Z1 et 95 g de la matrice matrice alumine-silice AS1 rapportés en matière solide tels que décrits ci-dessus. La mise en forme du support S14 est identique à celle du support S1 de l'exemple 1.

On obtient ainsi le support S14 contenant rapporté en masse anhydre 5% de zéolithe Z1. La composition massique du support S14 en produit anhydre est de 66,5% $Al_2O_3$ et de 33,5 % $SiO_2$.

Préparation du catalyseur d'hydrocraquage conforme à l'invention C14

Le catalyseur C14 est obtenu par imprégnation à sec du support S14. La méthode de préparation du catalyseur C14 est identique à celle du catalyseur C1 de l'exemple 1. Les teneurs massiques en $WO_3$, NiO, $P_2O_5$ du catalyseur C14 sont respectivement de 24,7%, 3,6% et 6,5%.

Les caractéristiques du catalyseur C14 sont les suivantes :

La surface BET est de 230 $m^2$/g.

Le volume poreux total, mesuré par adsorption d'azote, est de 0,37 ml/g.

Le volume poreux total, mesuré porosimétrie mercure, est de 0,35 ml/g.

Le diamètre poreux moyen, mesuré par porosimétrie au mercure, est de 73 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.

Le volume V3, mesuré par porosimétrie au mercure, compris dans les pores de diamètres supérieurs à $D_{moyen}$ + 30 Å est de 0,045ml/g.

Le volume V6, mesuré par porosimétrie au mercure, compris dans les pores de diamètres supérieurs à $D_{moyen}$ + 15 Å est de 0,05 ml/g,

Le volume poreux, mesuré par porosimétrie au mercure, compris dans les pores de diamètre supérieurs à 140 Å est de 0,040 ml/g,

Le volume poreux, mesuré par porosimétrie au mercure, compris dans les pores de diamètre supérieurs à 160 Å est de 0,0385 ml/g,

Le volume poreux, mesuré par porosimétrie au mercure, compris dans les pores de diamètre supérieurs à 200 Å est 0,038ml/g,

Le volume poreux, mesuré par porosimétrie au mercure, est compris dans les pores de diamètre supérieurs à 500 Å est de 0,032 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å ,
- les raies principales caractéristiques de la zéolithe Z1 de type USY.

La teneur en sodium atomique est de 190 +/- 20 ppm. La teneur en soufre atomique est de 800 ppm.

Exemple 15 : Préparation d'un catalyseur C15 (conforme)

La matrice alumine-silice utilisée pour la préparation du catalyseur C15 est la matrice alumine-silice AS1 définie dans l'exemple 1.

Zéolithe Z3

On utilise la zéolithe Z3 définie dans l'exemple 3.

Mise en forme du supports S15

On mélange ensuite 5 g de zéolithe Z3 et 95 g de la matrice matrice alumine-silice AS1 rapportés en matière solide tels que décrits ci-dessus. La mise en forme du support S15 est identique à celle du support S1 de l'exemple 1.

On obtient ainsi le support S15 contenant rapporté en masse anhydre 5% de zéolithe Z3. La composition massique du support S15 en produit anhydre est de 66,5,6% $Al_2O_3$ et de 33,5 % $SiO_2$.

Préparation du catalyseur d'hydrocraquage conforme à l'invention C15

Le catalyseur C15 est obtenu par imprégnation à sec du support S3. La méthode de préparation du catalyseur C15 est identique à celle du catalyseur C1 de l'exemple 1. Les teneurs massiques en $WO_3$, NiO, $P_2O_5$ du catalyseur C15 sont respectivement de 26,0%, 4,0% et 2%.

Les caractéristiques du catalyseur C15 sont les suivantes :

La surface BET est de 365 $m^2$/g.

Le volume poreux total, mesuré par adsorption d'azote, est de 0,38 ml/g.

Le volume poreux total, mesuré porosimétrie mercure, est de 0,32 ml/g.

Le diamètre poreux moyen, mesuré par porosimétrie au mercure, est de 77 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.

Le volume V3, mesuré par porosimétrie au mercure, compris dans les pores de diamètres supérieurs à $D_{moyen}$ + 30 Å est de 0,045ml/g.

Le volume V6, mesuré par porosimétrie au mercure, compris dans les pores de diamètres supérieurs à $D_{moyen}$ + 15 Å est de 0,05 ml/g,

Le volume poreux, mesuré par porosimétrie au mercure, compris dans les pores de diamètre supérieurs à 140 Å est de 0,040 ml/g,

Le volume poreux, mesuré par porosimétrie au mercure, compris dans les pores de diamètre supérieurs à 160 Å est de 0,038 ml/g,

Le volume poreux, mesuré par porosimétrie au mercure, compris dans les pores de diamètre supérieurs à 200 Å est 0,037ml/g,

Le volume poreux, mesuré par porosimétrie au mercure, est compris dans les pores de diamètre supérieurs à 500 Å est de 0,031 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å,
- les raies principales caractéristiques de la zéolithe Z3 de type USY.

La teneur en sodium atomique est de 190 +/- 20 ppm. La teneur en soufre atomique est de 800 ppm.

Exemple 16 : Préparation d'un catalyseur C16 (conforme)

La matrice alumine-silice utilisée pour la préparation du catalyseur C16 est la matrice alumine-silice AS2 définie dans l'exemple 5.

Zéolithe Z3

On utilise la zéolithe Z3 définie dans l'exemple 3.

Mise en forme du support S16

On mélange ensuite 5 g de zéolithe Z3 et 95 g de la matrice matrice alumine-silice AS2 rapportés en matière solide tels que décrits ci-dessus. La mise en forme du support S16 est identique à celle du support S1 de l'exemple 1.

On obtient ainsi le support S16 contenant rapporté en masse anhydre 5% de zéolithe Z3. La composition massique du support S16 en produit anhydre est de 66,5% Al2O3 et de 33,5 % SiO2

Préparation du catalyseur d'hydrocraquage conforme à l'invention C16

Le catalyseur C16 est obtenu par imprégnation à sec du support S16. La méthode de préparation du catalyseur C16 est identique à celle du catalyseur C1 de l'exemple 1. Les teneurs massiques en $WO_3$, NiO, $P_2O_5$ du catalyseur C16 sont respectivement de 24,5%, 3,5% et 2%.

Les caractéristiques du catalyseur C16 sont les suivantes :

La surface BET est de 360 $m^2$/g.

Le volume poreux total, mesuré par adsorption d'azote, est de 0,38 ml/g.

Le volume poreux total, mesuré porosimétrie mercure, est de 0,35 ml/g.

Le diamètre poreux moyen, mesuré par porosimétrie au mercure, est de 75 Å.

Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,9.

Le volume V3, mesuré par porosimétrie au mercure, compris dans les pores de diamètre supérieur à $D_{moyen}$ + 30 Å est de 0,072 ml/g.

Le volume V6, mesuré par porosimétrie au mercure, compris dans les pores de diamètre supérieur à $D_{moyen}$ + 15 Å est de 0,087 ml/g,

Le volume poreux, mesuré par porosimétrie au mercure, compris dans les pores de diamètre supérieur à 140 Å est de 0,055 ml/g,

Le volume poreux, mesuré par porosimétrie au mercure, compris dans les pores de diamètre supérieur à 160 Å est de 0,052 ml/g,

Le volume poreux, mesuré par porosimétrie au mercure, compris dans les pores de diamètre supérieur à 200 Å est de 0,050 ml/g,

Le volume poreux, mesuré par porosimétrie au mercure, est compris dans les pores de diamètre supérieur à 500 Å est de 0,042 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å,
- les raies principales caractéristiques de la zéolithe Z3 de type USY.

La teneur en sodium atomique est de 180 +/- 20 ppm. La teneur en soufre atomique est de 800 ppm.

Exemple 17: Préparation d'un catalyseur C17 (conforme)

La matrice alumine-silice utilisée pour la préparation du catalyseur C17 est la matrice alumine-silice AS1 définie dans l'exemple 1.

Zéolithe Z1

On utilise la zéolithe Z1 définie dans l'exemple 1.

Mise en forme du support S17

On mélange ensuite 5 g de zéolithe Z1 et 95 g de la matrice matrice alumine-silice AS1 rapportés en matière solide tels que décrits ci-déssus. La mise en forme du support S17 est identique à celle du support S1 de l'exemple 1.
On obtient ainsi le support S17 contenant rapporté en masse anhydre 5% de zéolithe Z1. La composition massique du support S17 en produit anhydre est de 66,5% $Al_2O_3$ et de 33,5 % $SiO_2$.

Préparation du catalyseur d'hydrocraquage conforme à l'invention C17

Le catalyseur C17 est obtenu par imprégnation à sec du support S17 sous forme d'extrudés par une solution aqueuse renfermant des sels de platine et d'acide phosphorique $H_3PO_4$. Le sel de platine est le l'acide hexachloroplatinique $H_2PtCl_6$. Après maturation à température ambiante dans une atmosphère saturée en eau, les extrudés imprégnés sont séchés à 120°C pendant une nuit puis calcinés à 500°C sous air sec. Les teneurs massiques en $PtO_2$ et $P_2O_5$ du catalyseur C17 sont respectivement de 0,58% et 1%.
Les caractéristiques du catalyseur C17 sont les suivantes :

La surface BET est de 290 $m^2$/g.
Le volume poreux total, mesuré par adsorption d'azote, est de 0,49 ml/g.
Le volume poreux total, mesuré porosimétrie mercure, est de 0,47 ml/g.
Le diamètre poreux moyen, mesuré par porosimétrie au mercure, est de 70 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ + 30 Å est de 0,045ml/g.
Le volume V6, mesuré par porosimétrie au mercure, compris dans les pores de diamètres supérieurs à $D_{moyen}$ + 15 Å est de 0,05 ml/g,
Le volume poreux, mesuré par porosimétrie au mercure, compris dans les pores de diamètre supérieurs à 140 Å est de 0,040 ml/g,
Le volume poreux, mesuré par porosimétrie au mercure, compris dans les pores de diamètre supérieurs à 160 Å est de 0,038 ml/g,
Le volume poreux, mesuré par porosimétrie au mercure, compris dans les pores de diamètre supérieurs à 200 Å est 0,036ml/g,
Le volume poreux, mesuré par porosimétrie au mercure, est compris dans les pores de diamètre supérieurs à 500 Å est de 0,030 ml/g,

Le diagramme de diffraction X contient :

- les raies principales caractéristiques de l'alumine gamma et notamment il contient les pics à un d compris entre 1,39 à 1,40 Å et à un d compris entre 1,97 à 2,00 Å,
- les raies principales caractéristiques de la zéolithe Z1 de type USY.

La teneur en sodium atomique est de 190 +/- 20 ppm. La teneur en soufre atomique est de 800 ppm.

Exemple 18: Préparation d'un catalyseur C18 (non conforme)

La matrice alumine-silice utilisée pour la préparation du catalyseur C18 est la matrice alumine-silice AS1 définie dans l'exemple 1.

Zéolithe Z1

On utilise la zéolithe Z1 définie dans l'exemple 1.

Mise en forme du support S18

On mélange ensuite 5 g de zéolithe Z1 et 95 g de la matrice matrice alumine-silice AS1 rapportés en matière solide tels que décrits ci-dessus. La mise en forme du support S18 est identique à celle du support S1 de l'exemple 1.
On obtient ainsi le support S18 contenant rapporté en masse anhydre 5% de zéolithe Z1. La composition massique du support S18 en produit anhydre est de 66,5% $Al_2O_3$ et de 33,5 % $SiO_2$.

Préparation du catalyseur d'hydrocraquage non conforme à l'invention C18

Le catalyseur C18 est obtenu par imprégnation à sec du support S18 sous forme d'extrudés par une solution aqueuse renfermant des sels de platine. Le sel de platine est l'acide hexachloroplatinique $H_2PtCl_6$. Après maturation à température ambiante dans une atmosphère saturée en eau, les extrudés imprégnés sont séchés à 120°C pendant une nuit puis calcinés à 500°C sous air sec. La teneur massique en $PtO_2$ du catalyseur C16 est de 0,58%. La teneur massique en $P_2O_5$ sur le catalyseur C16 est de 0%.
Les caractéristiques du catalyseur C18 sont les suivantes :

La surface BET est de 292 $m^2$/g.
Le volume poreux total, mesuré par adsorption d'azote, est de 0,49 ml/g.
Le volume poreux total, mesuré porosimétrie mercure, est de 0,47 ml/g.
Le diamètre poreux moyen, mesuré par porosimétrie au mercure, est de 70 Å.
Le rapport entre le volume V2, mesuré par porosimétrie au mercure, compris entre le $D_{moyen}$ - 30 Å et le $D_{moyen}$ + 30 Å sur le volume poreux total mesuré par porosimétrie au mercure est de 0,87.
Le volume V3, mesuré par porosimétrie au mercure, compris dans les pores de diamètres supérieurs à $D_{moyen}$ + 30 Å est de 0,045ml/g.
Le volume V6, mesuré par porosimétrie au mercure, compris dans les pores de diamètres supérieurs à $D_{moyen}$ + 15 Å est de 0,05 ml/g,
Le volume poreux, mesuré par porosimétrie au mercure, compris dans les pores de diamètre supérieurs à 140 Å est de 0,040 ml/g,
Le volume poreux, mesuré par porosimétrie au mercure, compris dans les pores de diamètre supérieurs à 160 Å est de 0,038 ml/g,
Le volume poreux, mesuré par porosimétrie au mercure, compris dans les pores de diamètre supérieurs à 200 Å est 0,036ml/g,
Le volume poreux, mesuré par porosimétrie au mercure, est compris dans les pores de diamètre supérieurs à 500 Å est de 0,030 ml/g,

Le diagramme de diffraction X contient :

- les raies principales caractéristiques de l'alumine gamma et notamment il contient les pics à un d compris entre 1,39 à 1,40 Å et à un d compris entre 1,97 Å à 2,00 Å,
- les raies principales caractéristiques de la zéolithe Z1 de type USY.

La teneur en sodium atomique est de 190 +/- 20 ppm. La teneur en soufre atomique est de 800 ppm.

Exemple 19 : Évaluation des catalyseurs C1 à C16 en hydrocraquage d'un distillat sous vide en une étape à haute pression

Les catalyseurs C1 à C16 dont la préparation est décrite dans les exemples 1 à 16 sont utilisés pour réaliser l'hydrocraquage d'un distillat sous vide dont les principales caractéristiques sont données ci-après :

| Type de charge | Distillat sous vide |
|---|---|
| Densité à 15°C | 0,9219 |
| Soufre % poids | 2,52 |
| Azote ppm poids | 880 |
| **Distillation simulée** | |
| DS : 05%p°C | 367 |
| DS : 10%p°C | 380 |
| DS : 50%p°C | 443 |
| DS : 90%p °C | 520 |
| DS : Point final °C | 690 |

Les catalyseurs C1 à C16 ont été mis en oeuvre selon le procédé de l'invention en utilisant une unité pilote comportant 1 réacteur à lit fixe traversé, les fluides circulent de bas en haut (up-flow).
Préalablement au test d'hydrocraquage, les catalyseurs sont sulfurés à 120 bars, à 350°C au moyen d'un gasoil de distillation directe additionné de 2% poids de DMDS.
Après sulfuration, les tests catalytiques ont été effectués dans les conditions suivantes :

Pression totale : 14 MPa
La vitesse spatiale (VVH) est égale à 0,7 h-1.
Température requise pour atteindre 70% de conversion nette.

Les performances catalytiques sont exprimées par la conversion nette en produits ayant un point d'ébullition inférieurs à 370°C, par la sélectivité nette en distillat moyen coupe 150-370°C et le rapport rendement Gasoil/rendement kérosène dans la fraction distillat moyen. Elles sont exprimées à partir des résultats de distillation simulée.
La conversion nette CN est prise égale à :

$$\text{CN } 370°C^- = [\,(\% \text{ de } 370°C^-_{\text{effluents}}) - (\% \text{ de } 370°C^-_{\text{charge}})\,] \,/\, [\,100 - (\% \text{ de } 370°C^-_{\text{charge}})]$$

avec

$\% \text{ de } 370°C^-_{\text{effluents}}$ = teneur massique en composés ayant des points d'ébullition inférieurs à 370°C dans les effluents,

et

$\% \text{ de } 370°C^-_{\text{charge}}$ = teneur massique en composés ayant des points d'ébullition inférieurs à 370°C dans la charge.

La sélectivité brute en distillat moyen SB est prise égale à :

$$SB \ \text{définition} = [(\text{fraction en } 150 - 370 \ _{effluents})] \ / \ [( \% \ \text{de } 370°C^-{}_{effluents})]$$

Le rendement gasoil/rendement kérosène (rapport Go./Ker.) dans la fraction distillat moyen est prise égale à :

Rapport Go./Ker. = rendement de la fraction (250°C-370°C) de l'effluent / rendement de la fraction (150°C - 250°C) dans l'effluent.

Les performances catalytiques obtenues sont données dans le tableau 1 ci-après.

Tableau 1 : Résultats catalytiques en hydrocraquage une étape et haute pression

| Catalyseur | Wh (h$^{-1}$) | T nécessaire pour 70%CN 370°C$^-$ % poids | SB % poids Distillat moyen (DM) |
|---|---|---|---|
| C1 | 0,7 | 395°C | 73,9 |
| C2 | 0,7 | 394°C | 73,8 |
| C3 | 0,7 | 393°C | 73,9 |
| C4 | 0,7 | 398°C | 71,0 |
| C5 | 0,7 | 395°C | 73,8 |
| C6 | 0,7 | 394°C | 73,7 |
| C7 | 0,7 | 392°C | 73,7 |
| C8 | 0,7 | 398°C | 71,1 |
| C9 | 0,7 | 397°C | 73,7 |
| C10 | 0,7 | 400°C | 73,7 |
| C11 | 0,7 | 395°C | 73,8 |
| C12 | 0,7 | 396°C | 73,7 |
| C13 | 0,7 | 397°C | 73,9 |
| C14 | 0,7 | 398°C | 73,6 |
| C15 | 0,7 | 398°C | 73.6 |
| C16 | 0,7 | 398°C | 73.6 |

Les exemples montrent que l'incorporation d'une zéolithe USY selon l'invention, que l'ajout contrôlé de dopant phosphore selon l'invention, permettent un gain d'activité significative sans perte de sélectivité en distillats moyens.
Ainsi, les catalyseurs C1 et C5 conformes à l'invention présentent des performances catalytiques améliorées par rapport aux catalyseurs C9 et C10 non conformes à l'invention car présentant des volumes poreux compris dans les pores de diamètre supérieurs à 500 Å respectivement égal à 0,002 ml/g et 0,33 ml/g. L'utilisation des catalyseurs C1 et C5 permet l'obtention de 70% de conversion à une température moins élevée que celle nécessitée par l'utilisation de C9 et C10. De même, les catalyseurs C1 et C5 sont particulièrement adaptés pour la production de distillats moyens conformément à l'objectif de l'invention.
Les catalyseurs C1, C2, C3, C15, C5, C6, C7 et C16 conformes à l'invention présentent des performances catalytiques améliorées par rapport aux catalyseurs C4 et C8 non conformes à l'invention car présentant un paramètre cristallin a de la maille élémentaire égal à 24,53 A.
Il est intéressant de noter que les catalyseurs C1, C2, C5 et C6 ayant un paramètre cristallin a de la maille élémentaire compris dans la plage préférée 24,38.10$^{-10}$ m et 24,24.10$^{-10}$ m présentent des performances catalytiques améliorées par rapport aux catalyseurs C15 et C16 eux aussi conformes à l'invention et sont particulièrement adaptés pour la production de distillats moyens conformément à l'objectif de l'invention.
Les catalyseurs C1, C5, C11 et C12 conformes à l'invention présentent des performances catalytiques améliorées par rapport aux catalyseurs C13 et C14 non conformes à l'invention car présentant une teneur en élément dopant respectivement égale à 0% et 6,5% en poids de phosphore.

Les exemples précédents montrent donc tout l'intérêt d'utiliser un catalyseur selon l'invention pour réaliser l'hydrocraquage de charge hydrocarbonées. En effet, l'association d'un support combinant une matrice silico-aluminique à teneur contrôlée en macropores, une zéolithe de type Y présentant un paramètre cristallin de maille a contrôlé et d'une phase hydrogénante optimisée permet d'obtenir des conversions élevées de la charge et des sélectivités en distillats moyens intéressantes.

Exemple 20 : Evaluation du catalyseur C17 et C18 dans des conditions simulant le fonctionnement du second réacteur d'un procédé d'hydrocraquage dit en deux étapes

La charge de la deuxième étape est produite par hydrotraitement d'un distillat sous vide sur un catalyseur d'hydroraffinage commercialisé par Axens en présence d'hydrogène, à une température de 395°C et à la vitesse spatiale horaire de 0,55h-1. La conversion en produits 380°C est d'environ 50% poids. Après une étape de séparation, la fraction 380°C+ est recueillie et va servir de charge pour la deuxième étape. Les caractéristiques physico-chimiques de cette charge sont fournies tableau 2 :

Tableau 2 : caractéristiques de la charge de deuxième étape

| Densité (20/4) | 0,853 |
|---|---|
| Soufre (ppm poids) | 2,5 |
| Azote (ppm poids) | 1,4 |
| Distillation simulée | |
| Point initial | 322°C |
| Point 5% | 364°C |
| Point 10% | 383°C |
| Point 50% | 448°C |
| Point 90% | 525°C |
| Point final | 589°C |

Cette charge est injectée dans l'unité de test d'hydrocraquage 2ème étape qui comprend un réacteur à lit fixe, à circulation ascendante de la charge (« up-flow »), dans lequel est introduit le catalyseur selon l'invention. Avant injection de la charge le catalyseur est réduit sous hydrogène pur à 450°C pendant 2 heures.

Les conditions opératoires de l'unité de test sont les suivantes :

| Pression totale | 14 Mpa |
|---|---|
| Catalyseur | 50 ml |
| Température | 370°C |
| Vitesse spatiale (wh) h-1 | 1,1 |

Les performances catalytiques obtenues dans ces conditions sont décrites tableau 3 de cet exemple.

Tableau 3 : Résultats catalytiques

| Catalyseur | Wh (h$^{-1}$) | CN 370°C$^-$ % poids | SB % poids Distillat moyen (DM) |
|---|---|---|---|
| C17 | 1,1 | 80,0 | 71,8 |
| C18 | 1,1 | 78,2 | 72,0 |

Ces résultats montrent donc tout l'intérêt d'utiliser un catalyseur selon l'invention pour réaliser l'hydrocraquage de charge hydrocarbonées. En effet, ils permettent d'obtenir des conversions élevées de la charge et des sélectivités en distillats moyens intéressantes.

Exemple 21 : Évaluation des catalyseurs C1 à C16 en hydrocraquage d'un distillat sous vide en une étape à pression modérée (hydrocraquage doux)

Les catalyseurs C1 et C16 dont la préparation est décrite dans les exemples 1 à 16 sont utilisés pour réaliser l'hydrocraquage du distillat sous vide en une étape à pression modérée (hydrocraquage doux). Les principales caractéristiques du distillat sous vide sont données ci-après :

| | |
|---|---|
| Type de charge | Distillat sous vide |
| Densité à 15°C | 0,9219 |
| Soufre % poids | 2,52 |
| Azote ppm poids | 880 |
| **Distillation simulée** | |
| DS : 05%p°C | 367 |
| DS : 10%p°C | 380 |
| DS : 50%p°C | 443 |
| DS : 90%p°C | 520 |
| DS : Point final °C | 690 |

Les catalyseurs C1 à C16 ont été mis en oeuvre selon le procédé de l'invention en utilisant une unité pilote comportant 1 réacteur à lit fixe traversé, les fluides circulent de bas en haut (up-flow).
Préalablement au test d'hydrocraquage, les catalyseurs sont sulfurés à 120 bars, à 350°C au moyen d'un gasoil de distillation directe additionné de 2% poids de DMDS.
Après sulfuration, les tests catalytiques ont été effectués dans les conditions suivantes :

| | | |
|---|---|---|
| Pression totale | 5,5 MPa | T=405°C |
| VVH globale | 0,8 h$^{-1}$ | |

La vitesse spatiale (VVH) est égale à 0,8 h-1.
Les performances catalytiques sont exprimées par la conversion nette en produits ayant un point d'ébullition inférieurs à 370°C, par la sélectivité nette en distillat moyen coupe 150-370°C et le rapport rendement Gasoil/rendement kérosène dans la fraction distillat moyen. Elles sont exprimées à partir des résultats de distillation simulée et les définitions sont identiques à celles données dans l'exemple 19.
Les performances catalytiques obtenues sont données dans le tableau 4 ci-après.

Tableau 4 : Résultats catalytiques en hydrocraquage doux à pression modérée

| Catalyseur | Wh(h$^{-1}$) | CN 370°C- % poids | SB % poids Distillat moyen (DM) |
|---|---|---|---|
| C1 | 0,8 | 49,8 | 81,2 |
| C2 | 0,8 | 49, 8 | 80,9 |
| C3 | 0,8 | 49,9 | 80,8 |
| C4 | 0,8 | 48,0 | 78,0 |
| C5 | 0,8 | 49,6 | 81,2 |
| C6 | 0,8 | 49, 8 | 80,9 |
| C7 | 0,8 | 50,0 | 80,7 |
| C8 | 0,8 | 48,1 | 78,1 |
| C9 | 0,8 | 48,1 | 80,6 |
| C10 | 0,8 | 47,0 | 80,7 |
| C11 | 0,8 | 49,5 | 81,2 |
| C12 | 0,8 | 49,6 | 81,1 |
| C13 | 0,8 | 49 | 80,5 |

(suite)

| Catalyseur | Wh(h$^{-1}$) | CN 370°C$^-$ % poids | SB % poids Distillat moyen (DM) |
|---|---|---|---|
| C14 | 0,8 | 49,1 | 80,6 |
| C15 | 0,8 | 48 | 80,5 |
| C16 | 0,8 | 48 | 80,5 |

L'interprétation des résultats du tableau 4 montrent donc, tout comme l'interprétation des résultats du tableau 1, l'intérêt d'utiliser un catalyseur selon l'invention pour réaliser l'hydrocraquage de charge hydrocarbonées. En effet, l'association d'un support combinant une matrice silico-aluminique à teneur contrôlée en macropores, une zéolithe de type Y présentant un paramètre cristallin de maille a contrôlé et d'une phase hydrogénante optimisée (notamment en ce qui concerne la teneur en élément dopant) permet d'obtenir des conversions élevées de la charge et des sélectivités en distillats moyens intéressantes.

**Revendications**

1. Catalyseur comprenant au moins un élément hydro-déshydrogénant choisi dans le groupe formé par les éléments du groupe VIB et du groupe VIII de la classification périodique, de 0.5 et 2,5% poids d'oxyde de phosphore et un support à base de zéolithe Y définie par un paramètre cristallin a de la maille élémentaire compris entre 24,40 x 10$^{-10}$ m et 24,15 x 10$^{-10}$ m et à base de silice - alumine contenant une quantité supérieure à 5% poids et inférieure ou égale à 95% poids de silice (SiO$_2$), ledit catalyseur présentant les caractéristiques suivantes :

   - un diamètre moyen poreux, mesuré par porosimétrie au mercure, compris entre 20 et 140 Å,
   - un volume poreux total, mesuré par porosimétrie au mercure, compris entre 0,1 ml/g et 0,5 ml/g,
   - un volume poreux total, mesuré par porosimétrie azote, compris entre 0,1 ml/g et 0,5 ml/g.
   - une surface spécifique BET comprise entre 100 et 600 m$^2$/g,
   - un volume poreux, mesuré par porosimétrie au mercure, compris dans les pores de diamètre supérieur à 140 Å inférieur à 0,1 ml/g,
   - un volume poreux, mesuré par porosimétrie au mercure, compris dans les pores de diamètre supérieurs à 500 Å strictement supérieur à 0,03 ml/g et inférieur à 0,1 ml/g.
   - un diagramme de diffraction X qui contient au moins les raies principales caractéristiques d'au moins une des alumines de transition comprise dans le groupe composé par les alumines alpha, rhô, chi, eta, gamma, kappa, thêta et delta.
   - une densité de remplissage tassée des catalyseurs supérieure à 0,75 g/cm$^3$.

2. Catalyseur selon la revendication 1 dans lequel le volume poreux, mesuré par porosimétrie au mercure, compris dans les pores de diamètre supérieurs à 500 Å est supérieur à 0,02 ml/g et inférieur à 0,07 ml/g.

3. Catalyseur selon la revendication 2 dans lequel le volume poreux, mesuré par porosimétrie au mercure, compris dans les pores de diamètre supérieurs à 500 Å est supérieur à 0,03 ml/g et inférieur à 0,07 ml/g

4. Catalyseur selon les revendications 1 à 3 dans lequel l'élément dopant est le bore ou le phosphore.

5. Catalyseur selon la revendication 4 dans lequel l'élément dopant est le phosphore.

6. Catalyseur selon l'une des revendications précédentes à base de molybdène et de tungstène.

7. Catalyseur selon l'une des revendications précédentes à base de nickel et de tungstène.

8. Catalyseur selon l'une des revendications précédentes qui contient entre 0.1 et 30 % en poids de zéolithe.

9. Catalyseur selon la revendication 1 dans lequel le support est à base de zéolithe Y définie par un paramètre cristallin a de la maille élémentaire compris entre 24,38 x 10$^{-10}$ m et 24,24 x 10$^{-10}$ m

10. Procédé d'hydrocraquage et/ou d'hydroconversion de charges hydrocarbonées utilisant le catalyseur selon l'une des revendications précédentes.

**11.** Procédé d'hydrocraquage et/ou d'hydroconversion selon la revendication 10 réalisé selon le procédé dit en une étape.

**12.** Procédé d'hydrocraquage et/ou d'hydroconversion selon la revendication 10 comportant au moins une première zone réactionnelle d'hydroraffinage et au moins une deuxième zone réactionnelle comportant un hydrocraquage d'au moins une partie de l'effluent de la première zone et comportant une séparation incomplète de l'ammoniac de l'effluent sortant de la première zone.

**13.** Procédé d'hydrocraquage et/ou d'hydroconversion selon la revendication 10 dans le procédé dit en deux étapes.

**14.** Procédé selon l'une des revendications 10 à 13 opérant, en présence d'hydrogène, à une température supérieure à 200°C, sous une pression supérieure à 1 MPa, la vitesse spatiale étant comprise entre 0,1 et 20h$^{-1}$ et la quantité d'hydrogène introduite est telle que le rapport volumique litre d'hydrogène / litre d'hydrocarbure soit compris entre 80 et 5000 l/l.

**15.** Procédé d'hydrocraquage et/ou d'hydroconversion selon l'une des revendications 10 à 14 opérant à une pression comprise entre 2 et 6 MPa et conduisant à des conversions inférieures à 40%.

**16.** Procédé d'hydrotraitement de charges hydrocarbonées utilisant le catalyseur selon l'une des revendications 9.

**17.** Procédé selon la revendication 16 placé en amont d'un procédé d'hydrocraquage.

**18.** Procédé selon la revendication 17 où le catalyseur d'hydrocraquage est à base de zéolite.

**19.** Procédé selon la revendication 17 où le catalyseur d'hydrocraquage est à base d'alumine-silice.

**20.** Procédé selon l'une des revendications 16 à 19 dans lequel le catalyseur d'hydrocraquage est à base de nickel et de tungstène.

**21.** Procédé selon l'une des revendications 10 à 20 dans lequel les charges hydrocarbonées sont choisies dans le groupe formé par les LCO (Light Cycle Oil (gazoles légers issus d'une unité de craquage catalytique), les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, seules ou en mélange.

**22.** Procédé selon l'une des revendications 10 à 19 dans lequel la charge passe au préalable sur un lit de catalyseur ou d'adsorbant différent du catalyseur d'hydrocraquage/hydroconversion ou d'hydrotraitement.

**Claims**

**1.** A catalyst comprising at least one hydrodehydrogenating element selected from the group formed by elements from group VIB and group VIII of the periodic table, 0.01% to 5.5% by weight of a doping element selected from phosphorus, boron and silicon and a support based on zeolite Y defined by a lattice parameter a of the unit cell in the range 24,40 x 10$^{-10}$ m to 24,15 x 10$^{-10}$ m and based on silica-alumina containing a quantity of more than 5% by weight and 95% by weight or less of silica ($SiO_2$), said catalyst having the following characteristics:

- a mean porc diameter, measured by mercury porosimetry, in the range 20 Å to 140 Å;
- a total pore volume, measured by mercury porosimetry, in the range 0.1 ml/g to 0.5 ml/g;
- a total pore volume, measured by nitrogen porosimetry, in the range 0.1 ml/g to 0.5 ml/g;
- a BET specific surface area in the range 100 to 600 m$^2$/g;
- a pore volume, measured by mercury porosimetry, included in pores with a diameter of more than 140 Å, of less than 0.1 ml/g;
- a pore volume, measured by mercury porosimetry, included in pores with a diameter of more than 500 Å, strictly greater than 0,03 ml/g and lower than 0,1 ml/g;

- an X ray diffraction diagram which contains at least the characteristic principal peaks of at least one transition alumina included in the group composed of alpha, rho, khi, eta, gamma, kappa, theta and delta aluminas;
- a catalyst settled packing density of more than 0.75 g/cm$^3$.

2. A catalyst according to claim 1, in which the pore volume, measured by mercury porosimetry, included in pores with diameter of more than 500 Å, is greater than 0,02 ml/g and lower than 0,07 ml/g.

3. A catalyst according to claim 2, in which the pore volume, measured by mercury porosimetry, included in pores with diameter of more than 500 Å, is greater than 0,03 ml/g and lower than 0,07 ml/g.

4. A catalyst according to claim 1 to 3, in which the doping element is boron or phosphorus.

5. A catalyst according to claim 4, in which the doping element is phosphorus.

6. A catalyst according to one of the preceding claims, based on molybdenum and tungsten.

7. A catalyst according to one of the preceding claims, based on nickel and tungsten.

8. A catalyst according to one of the preceding claims, containing 0.1% to 30% by weight of zeolite.

9. A catalyst according to claim 1, in which the support is based on Y zeolite defined by a lattice parameter a of the unit cell in the range 24,38 x 10$^{-10}$ m to 24,24 x 10$^{-10}$ m.

10. A process for hydrocracking and/or hydroconversion of hydrocarbon feeds using the catalyst according to one of the preceding claims.

11. A hydrocracking and/or hydroconversion process according to claim 10, carried out using the once-through process.

12. A hydrocracking and/or hydroconversion process according to claim 10 comprising at least one first hydrorefining reaction zone and at least one second reaction zone comprising hydrocracking at least a portion of the effluent from the first zone and comprising incomplete separation of ammonia from the effluent leaving the first zone.

13. A hydrocracking and/or hydroconversion process according to claim 10, in the two-step process.

14. A process according to one of claims 10 to 13 operating in the presence of hydrogen, at a temperature of more than 200°C, at a pressure of more than 1 MPa, the space velocity being in the range 0.1 to 20 h$^{-1}$ and the quantity of hydrogen introduced being such that the ratio of the litres of hydrogen/litres of hydrocarbon is in the range 80 to 5000 l/l by volume.

15. A hydrocracking and/or hydroconversion process according to one of claims 10 to 14, operated at a pressure in the range 2 to 6 MPa and resulting in conversions of below 40%.

16. A process for the hydrotreatment of hydrocarbon feeds using the catalyst according to one of claims 1 to 9.

17. A process according to claim 16, placed upstream of a hydrocracking process,

18. A process according to claim 17, in which the hydrocracking catalyst is based on zeolite.

19. A process according to claim 17, in which the hydrocracking catalyst is based on alumina-silica.

20. A process according to one of claims 16 to 19, in which the hydrocracking catalyst is based on nickel and tungsten.

21. A process according to one of claims 10 to 20, in which the hydrocarbon feeds are selected from the group formed by LCO (light cycle oil), atmospheric distillates, vacuum distillates, feeds from units for extracting aromatics from lubricating oil bases or from solvent dewaxing of lubricating oil bases, distillates from processes for fixed bed or ebullated bed desulphurization or hydroconversion of RA (atmospheric residues) and/or VR (vacuum residues) and/or deasphalted oils, or deasphalted oils, used alone or as a mixture.

22. A process according to one of claims 10 to 19, in which the feed initially passes over a bed of catalyst or adsorbent which is different from the hydrocracking/hydroconversion or hydrotreatment catalyst.

**Patentansprüche**

1. Katalysator, umfassend mindestens ein hydrierendes-dehydrierendes Element ausgewählt aus der Gruppe, die aus den Elementen der Gruppe VIB und der Gruppe VIII des Periodensystems gewählt sind, 0,5 bis 2,5 Gew.-% an Phosphoroxid und einen Träger auf Grundlage von Zeolith Y, welches durch einen Gitterparameter a der Elementarzelle definiert ist, der im Bereich von 24,40 x $10^{-10}$ m und 24,15 x $10^{-10}$ m liegt, und auf Grundlage von Siliciumdioxid-Aluminiumoxid, welches eine Menge an Siliciumdioxid ($SiO_2$) enthält, die größer als 5 Gew.-% ist und höchstens 95 Gew.-% beträgt, wobei der Katalysator die folgenden kennzeichnenden Eigenschaften aufweist:

   - einen mittleren Porendurchmesser, gemessen mittels Quecksilberporosimetrie, im Bereich von 20 bis 140 Å.
   - ein Gesamtporenvolumen, gemessen mittels Quecksilberporosimetrie, im Bereich von 0,1 ml/g bis 0,5 ml/g,
   - ein Gesamtporenvolumen, gemessen mittels Stickstoffporosimetrie, im Bereich von 0,1 ml/g bis 0,5 ml/g,
   - eine spezifische BET-Oberfläche im Bereich von 100 bis 600 $m^2$/g,
   - ein Porenvolumen, gemessen mittels Quecksilberporosimetrie, das in den Poren mit einem Durchmesser von mehr als 140 Å enthalten ist, von weniger als 0,1 ml/g,
   - ein Porenvolumen, gemessen mittels Quecksilberporosimetrie, das in den Poren mit einem Durchmesser von mehr als 500 Å enthalten ist, von unbedingt mehr als 0,03 ml/g und weniger als 0,1 ml/g,
   - ein Röntgenbeugungsmuster, das mindestens die kennzeichnenden Hauptlinien mindestens einer der Aluminiumoxid-Übergangsformen enthält, welche der Gruppe angehören, die sich aus den Aluminiumoxiden alpha, rho, chi, eta, gamma, kappa, theta und delta zusammensetzt,
   - eine Rütteldichte der Katalysatoren von mehr als 0,75 g/$cm^3$.

2. Katalysator nach Anspruch 1, wobei das Porenvolumen, gemessen mittels Quecksilberporosimetrie, das in den Poren mit einem Durchmesser von mehr als 500 Å enthalten ist, mehr als 0,02 ml/g und weniger als 0,07 ml/g beträgt.

3. Katalysator nach Anspruch 2, wobei das Porenvolumen, gemessen mittels Quecksilberporosimetrie, das in den Poren mit einem Durchmesser von mehr als 500 Å enthalten ist, mehr als 0,03 ml/g und weniger als 0,07 ml/g beträgt.

4. Katalysator nach den Ansprüchen 1 bis 3, wobei es sich bei dem Dotierelement um Bor oder Phosphor handelt.

5. Katalysator nach Anspruch 4, wobei es sich bei dem Dotierelement um Phosphor handelt.

6. Katalysator nach einem der vorhergehenden Ansprüche, auf Grundlage von Molybdän und Wolfram.

7. Katalysator nach einem der vorhergehenden Ansprüche, auf Grundlage von Nickel und Wolfram.

8. Katalysator nach einem der vorhergehenden Ansprüche, der 0,1 bis 30 Gew.% an Zeolith enthält.

9. Katalysator nach Anspruch 1, wobei der Träger auf Grund von Zeolith Y ist, welches durch einen Gitterparameter a der Elementarzelle im Bereich von 24,38 x $10^{-10}$ m bis 24,24 x $10^{-10}$ m definiert ist.

10. Verfahren zum Hydrocracken und/oder hydrierenden Umwandeln von kohlenwasserstoffhaltigen Chargen, wobei der Katalysator nach einem der vorhergehenden Ansprüche verwendet wird.

11. Verfahren zum Hydrocracken und/oder hydrierenden Umwandeln nach Anspruch 10, durchgeführt gemäß sogenanntem Ein-Schritt-Verfahren.

12. Verfahren zum Hydrocracken und/oder hydrierenden Umwandeln nach Anspruch 10, aufweisend mindestens einen ersten Reaktionsbereich zur hydrierenden Raffination und mindestens einen zweiten Reaktionsbereich, in welchem ein Hydrocracken mindestens eines Teils des Stoffstroms des ersten Bereichs erfolgt und in welchem eine unvollständige Abtrennung des Ammoniaks aus dem Stoffstrom erfolgt, der den ersten Bereich verlässt.

13. Verfahren zum Hydrocracken und/oder hydrierenden Umwandeln nach Anspruch 10 im sogenannten Zwei-Schritte-Verfahren.

**14.** Verfahren nach einem der Ansprüche 10 bis 13, das in Anwesenheit von Wasserstoff, bei einer Temperatur von mehr als 200°C, unter einem Druck von mehr als 1 MPa betrieben wird, wobei die Raumgeschwindigkeit im Bereich von 0,1 bis 20 h$^{-1}$ liegt und die eingeleitete Menge an Wasserstoff derart ist, dass das Volumenverhältnis an Litern Wasserstoff / Litern Kohlenwasserstoff im Bereich von 80 bis 5000 l/l liegt.

**15.** Verfahren zum Hydrocracken und/oder hydrierenden Umwandeln nach einem der Ansprüche 10 bis 14, welches bei einem Druck im Bereich von 2 bis 6 MPa betrieben wird und zu Umwandlungsgraden von weniger als 40 % führt.

**16.** Verfahren zur Hydrobehandlung von kohlenwasserstoffhaltigen Chargen, wobei der Katalysator nach einem der Ansprüche 9 verwendet wird.

**17.** Verfahren nach Anspruch 16, das einem Hydrocrackverfahren vorgeschaltet ist.

**18.** Verfahren nach Anspruch 17, wobei der Hydrocrack-Katalysator auf Zeolith basiert.

**19.** Verfahren nach Anspruch 17, wobei der Hydrocrack-Katalysator auf Aluminiumoxid-Siliciumdioxid basiert.

**20.** Verfahren nach einem der Ansprüche 16 bis 19, wobei der Hydrocrack-Katalysator auf Nickel und Wolfram basiert.

**21.** Verfahren nach einem der Ansprüche 10 bis 20, wobei die kohlenwasserstoffhaltigen Chargen aus der Gruppe ausgewählt sind, die von den LCO (Light Cycle Oil (leichte Gasölfraktion, die aus einer katalytischen Crackanlage stammt)), den atmosphärischen Destillaten, den Vakuumdestillaten, den Chargen, welche aus Anlagen zur Extraktion von aromatischen Verbindungen aus Schmierölgrundstoffen stammen oder welche aus der lösemittelgestützten Paraffinentfernung aus Schmierölgrundstoffen stammen, den Destillaten, welche aus Festbett- oder Wirbelbettverfahren zur Entschwefelung oder hydrierenden Umwandlung von RAT (atmosphärischen Rückständen) und/oder RSV (Vakuumrückständen) und/oder entasphaltierten Ölen stammen, den entasphaltierten Ölen, allein oder in Mischung, gebildet wird.

**22.** Verfahren nach einem der Ansprüche 10 bis 19, wobei die Charge im Vorfeld über ein Bett aus einem Katalysator oder Adsorptionsmittel geleitet wird, der/das sich vom Katalysator für das/die Hydrocracken/hydrierende Umwandlung oder die Hydrobehandlung unterscheidet.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5370788 A
- US 2908635 A
- US 3423332 A
- US 3433747 A
- US 3451947 A
- US 3629152 A
- US 3650988 A
- US 3520654 A
- US 3630670 A
- US 3864461 A
- US 4154812 A
- US 4313923 A
- DE 3243193
- US 4371513 A
- FR 1261182

- FR 1381282
- EP 15196 A
- FR 1357830
- US 3268295 A
- US 3245919 A
- WO 0001617 A
- US 1371808 A
- US 2892858 A
- US 4676928 A
- US 6030599 A
- US 4066574 A
- US 5601798 A
- US 5601978 A
- EP 0387109 A
- US 3124418 A

**Littérature non-brevet citée dans la description**

- *The Journal of American Society,* 1938, vol. 60, 309
- **Jean Charpin ; Bernard Rasneur.** Techniques de l'ingénieur, traité analyse et caractérisation. 1050-5
- **E.P.Barrett ; L.G.Joyner ; P.P.Halenda.** *The Journal of American Society,* 1951, vol. 73, 373
- **A. Lecloux.** Mémoires Société Royale des Sciences de Liège. 1971, 169-209
- **B.C. Lippens ; J.J. Steggerda.** Physical and Chemical aspects of adsorbents and catalysts. Academic Press, 1970, 171-211

- **G.Engelhardt ; D.Michel.** High résolution solid-state NMR of silicates and zeolites. Wiley, 1987
- **Kodakari et al.** *Langmuir,* 1998, vol. 14, 4623-4629
- *Alcoa paper n°19,* 1972, 9-12
- **D.W. Breck.** Zeolite Molecular Sieves Structure Chemistry and Uses. J.WILLEY and Sons, 1973
- **J.Scherzer ; A.J.Gruia.** *Hydrocracking, Science and Technology,* 1996
- **J.Scherzer.** Hydrocracking, Science and Technology. Editions M.Dékker, 1996